(19) Europäisches Patentamt
European Patent Office
Office européen des brevets

(11) EP 2 456 546 B1

(12) EUROPÄISCHE PATENTSCHRIFT

(45) Veröffentlichungstag und Bekanntmachung des Hinweises auf die Patenterteilung:
**22.04.2015 Patentblatt 2015/17**

(21) Anmeldenummer: **10734148.9**

(22) Anmeldetag: **22.07.2010**

(51) Int Cl.:
***B01D 71/64*** (2006.01) ***B01D 67/00*** (2006.01)
***B01D 53/22*** (2006.01) ***C08G 73/10*** (2006.01)
***B01D 69/08*** (2006.01) ***C08L 79/08*** (2006.01)

(86) Internationale Anmeldenummer:
**PCT/EP2010/060648**

(87) Internationale Veröffentlichungsnummer:
**WO 2011/009919 (27.01.2011 Gazette 2011/04)**

# (54) POLYIMIDMEMBRANEN AUS POLYMERISATIONSLÖSUNGEN

POLYIMIDE MEMBRANES MADE OF POLYMERIZATION SOLUTIONS

MEMBRANES DE POLYIMIDE OBTENUES À PARTIR DE SOLUTIONS DE POLYMÉRISATION

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **23.07.2009 AT 11642009**

(43) Veröffentlichungstag der Anmeldung:
**30.05.2012 Patentblatt 2012/22**

(73) Patentinhaber: **Evonik Fibres GmbH
4860 Lenzing (AT)**

(72) Erfinder:
- **UNGERANK, Markus
A-4320 Perg (AT)**
- **BAUMGARTEN, Goetz
45721 Haltern am See (DE)**

(74) Vertreter: **Wolf, Oliver
Evonik Industries AG
CI-IPM-PAT
Postcode 84/339
Rodenbacher Chaussee 4
63457 Hanau (DE)**

(56) Entgegenhaltungen:
**EP-A1- 0 410 793 EP-A1- 1 457 253
US-A- 5 055 116 US-A- 5 202 411**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 456 546 B1

## Beschreibung

Gebiet der Erfindung

Die Erfindung betrifft Polyimidmembranen, die direkt aus einer Polyimidpolymerisationslösung hergestellt werden, ohne dass das Polyimid in Form eines Feststoffs, insbesondere nicht als getrockneter Feststoff, vor allem nicht als getrocknetes Pulver, isoliert und dann wiederaufgelöst wurde. Die die Erfindung betreffenden Polyimidmembranen können entweder Flachmembranen oder Hohlfasermembranen sein. Die Polyimidmembranen können sowohl Porenmembranen in Form von Micro-, Ultra- oder Nanofiltartionsmembranen als auch porenfreie Membranen zur Trennung von Gasen sein. Alle Membranen sind integral asymmetrische Membranen und werden durch ein Phaseninversionsverfahren hergestellt.

Aufgabe

Aufgabe dieser Erfindung ist es, einen Herstellprozess für Polyimide zu finden, bei dem keine Substanzen verwendet werden, die im nachfolgenden Membranherstellprozess stören. Weiters soll es mit dem erfindungsgemäßen Prozess möglich sein Membranen mit ausreichenden mechanischen Eigenschaften herzustellen.

Weitere nicht explizit genannte Aufgaben ergeben sich aus dem Gesamtzusammenhang der nachfolgenden Beschreibung, Beispiele und Ansprüche.

Stand der Technik

Zur Herstellung von Phaseninversionsmembranen werden im allgemeinen Polymere benötigt, die in herkömmlichen mit Wasser mischbaren Lösungsmitteln löslich sind. Nach diesem Verfahren werden zurzeit tausende Tonnen Polyethersulfonmembranen hergestellt. Als Lösungsmittel kommen unter anderem, aber nicht ausschließlich Dimethylformamid (DMF), Dimethylacetamid oder N-Methylpyrrolidon in Frage. Es werden viele Additive wie Colösungsmittel, Nicht-Lösungsmittel, Porenbildner, Hydrophilierungsmittel und etc. hinzugemischt, um die Eigenschaften der Membranen zu beeinflussen. Hierbei wird gewöhnlich von einem Granulat ausgegangen und die Gießlösung durch anteigen mit den Lösungsmitteln und den Additiven hergestellt. Entscheidend für den Erfolg in der Membranherstellung sind hierbei auch die Molmasse und die Verteilung des verwendeten Polymeren. Generell verlangt man Polymere mit hohen Molmassen und schmaler Verteilung.

Beispiele für Polyimidmembranen, die zur fareparation eingesetzt werden können, sowie Verfahren zu deren Herstellung werden in der EP 410793 und der US 5055116 offenbart.

P84 ist ein in der Literatur allgemein bekanntes Polymer und wird für die Herstellung von Flachmembranen und Hohlfasermembranen verwendet (US 2006/0156920, WO 04050223, US 7018445, US 5635067, EP 1457253, US 7169885, US 20040177753, US 7025804). P84 wird in 2 Modifikationen (P84 Typ 70 und P84 HT) von der Fa. HP Polymer in Lenzing/Österreich in Pulverform vertrieben. Die Kunden lösen dieses Pulver dann wieder in aprotisch dipolaren Lösungsmitteln auf und versetzen es mit Additiven. Daraus können dann Membranen hergestellt werden. Hierbei berichten jedoch diverse Kunden (z.B. Air Liquide Medal, US 2006/156920), dass die daraus hergestellten Folien und Membranen sehr brüchig sind und nur Blends mit anderen Polymeren zu stabilen Folien und Hohlfasermembranen führen. Das Pulver muss einer speziellen Behandlung unterzogen werden, dass es genügend hohe Molmassen hat. (Air Liquide WO 2006/092677). Hierbei sind die Behandlungsdauer und das Verfahren sehr kritisch. Das Ergebnis sind Pulver mit leicht unterschiedlichen Eigenschaften, die aber Gießlösungen mit unterschiedlichen Viskositäten ergeben. Somit ist eine gleichmäßige Herstellung der Polymermembranen nur schwer möglich.

P84 wird auch mit anderen Polymeren in einem Blend verarbeitet (US 2006/156920), sodass die daraus hergestellten Membranen genügend hohe Stabilitäten aufweisen. Nachteilig hier ist aber, dass die sehr guten Trenneigenschaften für Gase, Plastifizierungsstabilitäten gegenüber $CO_2$ und Chemikalienstabilitäten gegenüber vielen Lösungsmitteln zum Teil durch Beimischung anderer Polymere gestört oder sogar zerstört werden.

Die Ursache für die geringe Molmasse liegt im Herstellprozess des P84 Pulvers. Hierbei verliert das Polymer an Molmasse. Die Molmassen direkt nach der Polymerisation und nach der Herstellung des Pulvers sind in Tabelle 1 dargestellt.

**Tabelle 1: Molmassen nach der Polymerisation und nach der Pulverherstellung von P84 Typ 70 und P84 HT**

| Type | | Direkt nach der Polymerisation in Lösung (g.mol-1) | Nach der Überführung in Pulver (g.mol-1) |
|---|---|---|---|
| P84 Typ70 | Mn | 76 600g | 56 200 |
| | Mw | 146 200 | 101 500 |
| | Mp | 130 500 | 93 500 |
| | PDI | 1,91 | 1,81 |
| P84 HT | Mn | 75 500 | 52 200 |
| | Mw | 150 900 | 84 200 |
| | Mp | 122 200 | 84 100 |
| | PDI | 2,00 | 1,61 |

Man sieht deutlich, dass das Polymer bei der Überführung von der Polymerisationslösung in das Pulver durch einen Fällprozess an Molmasse verliert.

Auch für die Herstellung von Flachmembranen wird P84 Pulver verwendet (WO 2007/125367, WO 2000/06293). Hier gelten die gleichen Probleme wie bei der Herstellung von Hohlfasermembranen.

Messtechnik

Viskositätsbestimmung

Die dynamische Viskosität $\eta$ wird durch Scherung der Polymerlösung in einem zylindrischen Spalt bei konstanter Temperatur von 25°C einmal durch Vorgabe verschiedener Drehzahlen $\Omega$ (bzw. Schergefällen y) und anschließend durch Vorgabe verschiedener Schubspannungen $\tau$ ermittelt.

Als Messgerät wird ein HAAKE RS 600 verwendet mit einer flüssigtemperierbaren Messbecheraufnahme TEF/Z28, einem zylindrischen Rotor Z25DIN53019/ISO3219 und Alu-Einwegmessbecher Z25E/D=28mm

Es wird die Schubspannung $\tau$ bei einem bestimmten Schergefälle vermessen. Die dynamische Viskosität $\eta$ berechnet sich aus folgenden Formeln und wird bei einem Schergefälle von 10 $s^{-1}$ in Pa.s angegeben.

Viskositätsfunktion

$$\frac{\tau}{\gamma} = \eta * \gamma^2$$

Schergefälle

$$\gamma = M * \Omega$$

$\tau$ ... Schubspannung
$\eta$ ... Dynam. Viskosität
M ... Scherfaktor des Rotors: 12350 rad/s
$\Omega$ ... Winkelgeschwindigkeit

***Molmassenbestimmung***

Die Molmassenbestimmung erfolgt mit Hilfe einer Gelpermeationschromatographie. Die Kalibrierung erfolgt mit Polystyrolstandards. Die berichteten Molmassen sind daher als relative Molmassen zu verstehen.

Folgende Komponenten und Einstellungen wurden verwendet:

| | |
|---|---|
| HPLC | WATERS 600 Pumpe, 717 Autoinjektor, 2487 UV-Detektor |
| Vorsäule | PSS SDV Vorsäule |
| Säulen | PSS SDV 10μm 1000, $10^5$ und $10^6$ Å |
| Laufmittel | 0.01M LiBr + 0.03M $H_3PO_4$ in DMF (sterilfiltriert, 0.45μm) |
| Fluss | 1.0ml/min |
| Laufzeit | 45min |
| Druck | ~1.550psi |
| Wellenlänge | 270 nm (bei Verwendung des UV-Detektors) |
| Injektionsvolum en | 50 μl bzw. 20 μl (für Lösungen c >1g/l) |
| Standards | PS(Polystyrol)-Standards (engverteilt, 300-3·$10^6$, PSS) |

***Permeabilitäten***

Die Gaspermeabilitäten werden für Folien in Barrer ($10^{-10}$ $cm^3 \cdot cm^{-2}.cm.s^{-1}.\ cmHg^{-1}$) angegeben. Die Permeanzen der Hohlfasern oder Flachmembranen für Gase werden in GPU (Gas Permeation Unit, $10^{-6}$ $cm^3 \cdot cm^{-2}.s^{-1}.cmHg^{-1}$) angegeben. Die Flüsse von Nano- und Ultrafiltrationsmembranen werden in $l.m^{-2}.h^{-1}.bar^{-1}$ angegeben.

Gaspermeabilitäten

Die Messung der Permeabilitäten für Gase erfolgt nach der Druckanstiegsmethode. Hierbei wird eine Flachfolie mit einer Dicke zwischen 10 und 70 μ auf einer Seite mit einem Gas oder Gasgemisch beaufschlagt. Auf der anderen Seite, der Permeatseite herrscht zu Beginn des Versuches Vakuum (ca. $10^{-2}$ mbar). Es wird nun der Druckanstieg auf der Permeatseite über die Zeit aufgezeichnet.

Die Permeabilität des Polymeren lässt sich nach folgender Formel berechnen:

$$P = \frac{V_{dead}.MW_{gas}.l}{\rho.R.T.A.\Delta p}.\frac{dp}{dt}.10^{10}$$

P ... Permeabilität in Barrer ($10^{-10}$ $cm^3 \cdot cm^{-2}.cm.s^{-1}.cmHg^{-1}$) $V_{3ead}$ ... Volumen der Permeatseite in $cm^3$
$MWg_{as}$ ... Molmasse des Gases in $g.mol^{-1}$
l ... Schichtdicke der Folie in cm
ρ .... Dichte des Gases in $g.cm^{-3}$
R ... Gaskonstante in $cm^3.cmHg.K^{-1}.mol^{-1}$
T ... Temperatur in Kelvin
A ... Fläche der Folie in $cm^2$
Δp ... Druckdifferenz zwischen Feed und Permeatseite in cmHg dp/dt . Druckanstieg pro Zeit auf der Permeatseite in $cmHg.s^{-1}$

Wenn die Permeabilität von Hohlfasern gemessen wird, so wird dieselbe Druckanstiegsmethode verwendet.

Die Berechnung der Permeanz erfolgt nach folgender Formel:

$$p = \frac{V_{dead}.MW_{gas}}{\rho.R.T.A.\Delta p}.\frac{dp}{dt}.10^6$$

p ... Permeanz in GPU (Gas permeation units. $10^{-6}$ $cm^3 \cdot cm^{-2}.s^{-1}.cmH^{g-1}$)
$U_{dead}$ ... Volumen der Permeatseite in $cm^3$

$MW_{gas}$ ... Molmasse des Gases in $g.mol^{-1}$
ρ .... Dichte des Gases in $g.cm^{-3}$
R ... Gaskonstante in $cm^3.cmHg.K^{-1}.mol^{-1}$
T ... Temperatur in Kelvin
A ... Außenfläche der Hohlfaser in $cm^2$
Δp ... Druckdifferenz zwischen Feed und Permeatseite in cmHg dp/dt . Druckanstieg pro Zeit auf der Permeatseite in $cmHg.s^{-1}$

Die Selektivitäten von verschiedenen Gaspaaren sind Reingasselektivitäten. Die Selektivität zwischen zwei Gasen berechnet sich aus dem Quotient der Permeabilitäten:

$$S = \frac{P_1}{P_2}$$

S ... ideale Gasselektivität
$P_1$ ... Permeabilität oder Permeanz des Gases 1
$P_2$ ... Permeabilität oder Permeanz des Gases 2

**Flüssigkeitspermeanzen**

Die Bestimmung der Permeanzen von Flachmembranen erfolgt mit einer Milipore- Rührzelle, die mit 5 bis 6 bar Stickstoff beaufschlagt wird. Es wird der Permeatfluss pro Zeiteinheit bei einem bestimmten Druck gemessen. Die Permeanz ergibt sich aus:

$$p = \frac{\dot{v}}{\Delta p.A}$$

P ... Permeanz in $l.m^{-2}.h^{-1}.bar^{-1}$
v ... Volumenstrom in $l.h^{-1}$
Δp ... Druckdifferenz zwischen Feed- und Permeatseite in bar
A ... Filtrationsfläche in $m^2$

Der Rückhalt R ergibt sich aus folgender Formel:

$$R = (1 - \frac{c_P}{c_F}).100$$

R ... Rückhalt in %
$C_p$ ... Konzentration des gelösten Stoffes im Permeat
$C_F$.... Konzentration des gelösten Stoffes im Feed

Ist der Rückhalt 100%, so wird der gesamte Stoff von der Membran zurückgehalten, ist der Rückhalt 0 %, so lässt die Membran den gesamten gelösten Stoff durch.

Lösung des Problems

Das Problem des Molmassenabbaus bei der Herstellung des P84 Pulvers wird umgangen, indem das Polymer nach der Polymerisation in einem aprotisch dipolaren Lösungsmittel nicht in Form eines Feststoffs, insbesondere nicht als getrockneter Feststoff, vor allem nicht als getrocknetes Pulver, isoliert wird sondern die Polymerisationslösung direkt zur Herstellung der Membranen Verwendung findet.
Der Membranherstellprozess erfolgt nach folgenden Teilschritten:

a) Polymerisation
b) Herstellung der Gießlösung

c) Membranherstellung

Polymerisation

Die Herstellung der Polyimide erfolgt nach einer Polykondensation eines aromatischen Tetracarbonsäureanhydrides mit einem aromatischen Diisocyanat unter Freisetzung von Kohlendioxid. Nachfolgend beschrieben sind die bevorzugt verwendeten Substanzen und Kombinationen daraus:

Dianhydride:

3,4,3'4'-Benzophenontetratcarbonsäuredianhydrid, 1,2,4,5-Benzoltetracarbonsäuredianhydrid, 3,4,3'4'-Biphenyltetratcarbonsäuredianhydrid,
Oxydiphthalsäuredianhydrid,
Sulfonyldiphthalsäuredianhydrid, 1,1,1,3,3,3-Hexafluor-2,2-propylidendiphthalsäuredianhydrid

Diisocyanate:

2,4-Tolylendiisocyanat, 2,6- Tolylendiisocyanat, 4,4'-Methylendiphenyldiisocyanat, 2,4,6- Trimethyl-1,3-phenylendiisocyanat, 2,3,4,5-Tetramethyl-1,4-phenylendiisocyanat

Die Polymerisation erfolgt in einem aprotisch dipolaren Lösungsmittel. Es werden vorzugsweise aber nicht ausschließlich Dimethylformamid, Dimethylacetamid, N-Methylpyrrolidon, N-Ethylpyrolidon und Sulfolan einzeln oder in Mischungen verwendet.

Hierbei wird das aromatische Dianhydrid oder Gemische von aromatischen Dianhydriden in Konzentrationen von 10 Gew.-% bis 40 Gew.-%, vorzugsweise zwischen 18 Gew.-% und 32% Gew.-% und besonders vorzugsweise zwischen 22 Gew.-% und 28% Gew.-% in einem aprotisch dipolaren Lösungsmittel gelöst und auf 50 °C bis 150°C, vorzugsweise 70°C bis 120°C und besonders vorzugsweise auf 80 °C bis 100°C erhitzt. Zu dieser Lösung werden 0,01% Gew.-% bis 5 Gew.-%, vorzugsweise 0,05 Gew.-% bis 1 Gew.-%, und besonders vorzugsweise 0,1 Gew.-% bis 0,3% Gew.-% eines basischen Katalysators gegeben. Als Katalysator kommen in Frage:

- Alkali- und Erdalkalihydroxide, -methylate, - ethanolate, -carbonate und -phosphate wie zum Beispiel aber nicht ausschließlich Natriumhydroxid, Kaliumhydroxid, Natriummethylat, Kaliummethylat, Natriumethylat, Kaliumethylat, Natriumcarbonat, Natriumhydrogencarbonat, Kaliumcarbonat, Kaliumhydrogencarbonat, Kaliumphosphat, Kaliumyhdrohenphosphat, Kaliumdihydrogenphosphat
- Tertiäre Amine wie zum Beispiel aber nicht ausschließlich: Trimethylamin, Triethylamin, Tripropylamin, Diazabicycloundecan, Diazabicyclooctan, Dimethylaminopyridin,

Das Diisocyanat wird dann über einen Zeitraum von 1 bis 25 Stunden, vorzugsweise 3 bis 15 Stunden und besonders vorzugsweise 5 bis 10 Stunden zugegeben.

Besonders bevorzugt werden folgende Polyimide hergestellt:

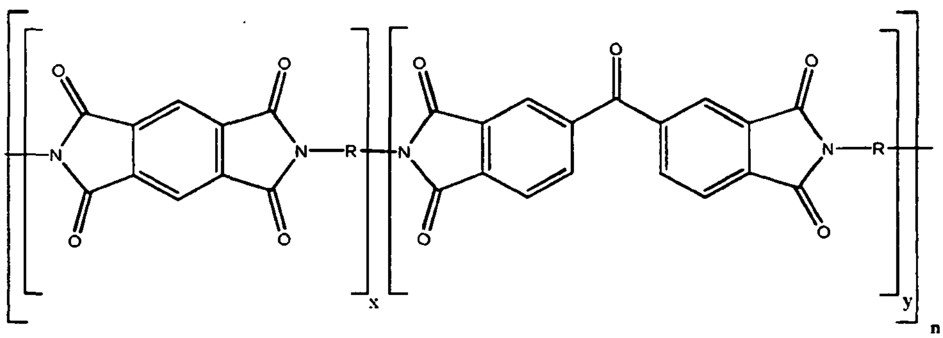

R ist ausgewählt aus der Gruppe bestehend aus

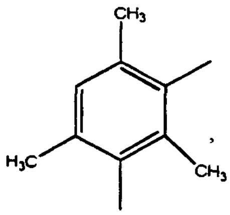 , 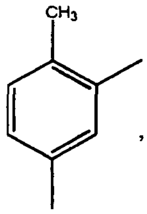 , 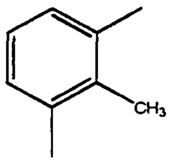 , 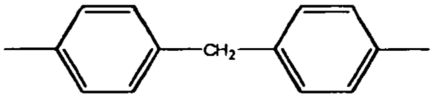

x.y: Molenbruch mit 0 < x < 0,5 und 1 > y > 0,5

Es entsteht eine klare goldgelbe bis dunkelbraune Polymerlösung mit einer Viskosität zwischen 1 und 300 Pa.s, vorzugsweise 20 bis 150 Pa.s und besonders vorzugsweise 40 bis 90 Pa.s. Die Molmassen Mp liegen bei größer als 100 000 $g.mol^{-1}$ und unterscheiden sich daher deutlich von den Polyimid-Polymer-, insbesondere den P84 Polymer-, Pulvern.

Das erfindungsgemäße Polyimidpolymer fällt gelöst in einem aprotisch dipolaren Lösungsmittel nach der Reaktion an. Es sind keine störenden Begleitstoffe oder Nebenprodukte in der Polymerlösung. Die Viskosität ist sehr hoch und geeignet zur Herstellung von Membranen. Aus diesem Grund ist es auch ökonomisch vorteilhaft, das Polymer nicht auszufällen und dann wieder im selben Lösungsmittel aufzulösen. Die Lösungen werden daher ohne Isolierung des Polymers und bevorzugt auch ohne sonstige weitere Behandlung direkt zur Herstellung der Gießlösung eingesetzt.

Herstellung der Gießlösung

Die Polymerlösungen, die aus der Polykondensation erhalten werden, haben einen Feststoffgehalt zwischen 22 Gew.-% und 28% Gew.-% und können ohne weitere Behandlung zur Herstellung der Gießlösung verwendet werden.

Die erfindungsgemäßen Gießlösung zeichnen sich durch folgende Eigenschaften aus:

- Sie weisen eine genügend hohe Viskosität zur Herstellung von Flach- und Hohlfasermembranen auf
- Sie können Additive enthalten , die die Bildung von großen Hohlräumen (Macrovoids) in den Membranen verhindern
- Sie können flüchtige Lösungsmittel zur Herstellung einer Oberfläche mit der gewünschten Porengröße enthalten

Die Viskosität der Gießlösung ist dann ideal, wenn sie dem sogenannten "Entanglement"-Punkt im Verlauf der Viskosität in Abhängigkeit des Feststoffes entspricht. Dieser Punkt ist jener Punkt wo die Abhängigkeit der Viskosität vom Feststoff vom linearen in ein exponentielles Verhalten übergeht. Dieser Punkt ist auch sehr stark von der Molmasse abhängig. Je höher die Molmasse ist, umso niedriger ist der Feststoffgehalt, bei dem Entanglement auftritt.

Im Hinblick auf die Viskosität, die Molmassen und die Molmassenverteilung unterscheiden sich die nach dem erfindungsgemäßen Verfahren erhältlichen Gießlösungen deutlich von den Gießlösungen des Standes der Technik. Nur nach dem erfindungsgemäßen Verfahren sind Gießlösungen erhältlich, die eine hohe Viskosität in Kombination mit einer hohen Molmasse und einer engen Molmassenverteilung des Polyimids aufweisen. Mit den erfindungsgemäßen Verfahren können somit Membranen hergestellt werden, welche hervorragende mechanische Eigenschaften aufweisen.

Mit den Verfahren des Standes der Technik, d.h. mit Auflösen von pulverförmigen Polyimiden und anschließender Nachbehandlung zur Erhöhung der Molmasse können keine Gießlösungen mit vergleichbarer Eigenschaftskombination erhalten werden.

Im erfindungsgemäßen Verfahren können auch Additive zugesetzt werden. Durch verschiedene Mengen an Additiven ergeben sich unterschiedliche Feststoffgehalte, die dann den Entanglementpunkt verschieben würden. Hier kann durch eine Anpassung der Molmasse in der Polymerisation dieser Entanglementpunkt wieder verschoben werden.

Wenn die Zusammensetzung der Gießlösung sich sehr weit wegbewegt von der Konzentration, bei der Phasenseparation stattfindet, so wird der Gradient zwischen Lösungsmittel und Nichtlösungsmittel bei der Membranherstellung durch Phaseninversion sehr groß, und man erhält große Hohlräume in den Membranen. Diese auch Macrovoids genannten Hohlräume verursachen eine geringere Druckstabilität der Membranen in der Anwendung und limitieren deren Einsatz zum Beispiel im Einsatz bei der Erdgasaufreinigung. Man kann die Bildung der Macrovoids durch Zugabe von Nichtlösungsmitteln verhindern. Hierzu kommen folgende mit Wasser mischbare Lösungsmittel oder Mischungen daraus in Frage.

Die Liste ist nur als Beispielliste zu sehen, der geübte Kenner findet auch noch andere Lösungsmittel.

- Alkohole wie zum Beispiel Methanol, Ethanol, Isopropanol, Propanol, Butanol, Butandiol, Glycerin,
- Wasser,
- Ketone wie zum Beispiel Aceton oder Butanon

Zur Herstellung einer definierten Oberfläche der Membran kann man im Prinzip mehrere Verfahren benutzen:

Neben der Delayed Demixing Methode führt auch eine Abdampfung von flüchtigen Colösungsmitteln zu sehr dünnen selektiven Schichten sowohl im Bereich Gastrennmembran wie auch im Bereich Nano- und Ultrafiltrationsmembran. Der Grad der Abdampfung und damit die Porengröße wird durch die Art des flüchtigen Lösungsmittels, dessen Konzentration, der Abdampfzeit, der Temperatur der Gießlösung, der Menge und Temperatur des umgebenden Gases bei der Abdampfstrecke beeinflusst.

Als flüchtige Lösungsmittel kommen folgende Lösungsmittel in Frage. Diese sollten mit Wasser mischbar sein, wie beispielsweise Aceton, Tetrahydrofuran, Methanol, Ethanol, Propanol, Isopropanol, Dioxan, Diethylether.

Die Herstellung der Gießlösung erfolgt bevorzugt durch Zugabe der Additive durch Zudosieren der Mischung der Additive oder getrennt voneinander hintereinander. Dabei werden die Additive zur Mischung langsam unter Rühren zudosiert. Die Zudosierung erfolgt bevorzugt zwischen 10 min und 3 Stunden, besonders bevorzugt zwischen 30 min und 2 Stunden. Durch die Zugabe der Colösungsmittel erfolgt teilweise Ausfällung des Polyimides an der Eintropfstelle. Die Feststoffe lösen sich aber nach wenigen Minuten wieder rückstandsfrei auf. Die klare Lösung wird dann noch durch ein 15 μ Stahlmaschensieb filtriert, um störende Begleitstoffe zu entfernen, die zu Fehlern in der Membranoberfläche führen würden.

Nach der Filtration wird die Lösung durch 2 Tage Stehenlassen bei 50 °C in einem geschlossenen Behälter von Luftblasen befreit und damit entgast.

Herstellung der Hohlfasern

Die entgaste, filtrierte und mit Additiven versetzte Polyimidpolymerlösung wird vorzugsweise auf 20 bis 100°C, besonders vorzugsweise auf 30 bis 70°C thermostatisiert. Die Lösung wird mit einer Zahnradpumpe durch den äußeren Teil einer Zweistoffdüse gepumpt. Der Aussendurchmesser der Zweistoffdüse beträgt 600 μm der Innendurchmesser beträgt 160 μm, die Pumpleistung beträgt zwischen 1,3 und 13,5 ml/min. Im inneren Teil der Zweistoffdüse wird ein Flüssigkeitsgemisch aus Wasser und einem oder einem Gemisch mehrerer aprotisch dipolarer Lösungsmittel gepumpt.

Als Lösungsmittel kommen unter anderem aber nicht ausschließlich Dimethylformamid, Dimethylacetamid, N-Methylpyrrolidon, N-Ethylpyrrolidon, Sulfolan oder Dimethylsulfoxid in Frage.

Die Zusammensetzung beträgt zwischen Lösungsmittel und Wasser beträgt zwischen 10 Gew.-% und 95 Gew.-% Lösungsmittel und 90 Gew.-% und 5 Gew.-% Wasser, vorzugsweise zwischen 30 Gew.-% und 90 Gew.-% Lösungsmittel und 70 Gew.-% und 10 Gew.-% Wasser und besonders vorzugsweise zwischen 50 Gew.-% und 80 Gew.-% Lösungsmittel und 50 Gew.-% und 20 Gew.-% Wasser. Die Pumpleistung beträgt zwischen 0,2 ml/min und 10 ml/min.

Die so entstehende Hohlfaser tritt nun in eine Röhre ein, die mit einem trockenen thermostatisierten Gas durchflutet ist. Als Gase kommen in Frage: Stickstoff, Luft, Argon, Helium, Kohlendioxid, Methan oder andere technische inerte Gase. Die Temperatur der Gase wird über einen Wärmetauscher eingestellt und beträgt vorzugsweise zwischen 20 und 250°C, besonders vorzugsweise zwischen 30 und 150°C und ganz besonders vorzugsweise zwischen 40 und 120 °C.

Die Gasgeschwindigkeit in der Röhre beträgt vorzugsweise zwischen 0,1 und 10 m/min, besonders vorzugsweise zwischen 0,5 und 5 m/min und ganz besonders vorzugsweise zwischen 1 und 3 m/min. Der Abstand und damit die Länge der Röhre beträgt vorzugsweise zwischen 5 cm und einem Meter, besonders vorzugsweise zwischen 10 und 50 cm. Der so konditionierte Faden taucht dann in ein Wasserbad ein, das die Polymermasse koagulieren lässt und so die Membran formt. Die Temperatur des Wasserbades hat vorzugweise zwischen 1 und 60°C, besonders vorzugsweise zwischen 5 und 30 °C und besonders vorzugsweise zwischen 8 und 16 °C.

Die Konzentration an aprotisch dipolaren und anderen Lösungsmitteln wie zum Beispiel aber nicht ausschließlich Dimethylformamid, Dimethylacetamid, N-Methylpyrrolidon, N-Ethylpyrrolidon, Sulfolan, Dimethylsulfoxid, Tetrahydrofuran, Dioxan, Isopropanol, Ethanol oder Glycerin im Fällbad beträgt zwischen 0,01 Gew.-% und 20 Gew.-%, vorzugsweise zwischen 0,1 Gew.-% und 10 Gew.-% und besonders vorzugsweise zwischen 0,2 Gew.-% und 1 Gew.-%.

Die Abzugsgeschwindigkeit der Hohlfasern liegt zwischen 2 und 100 m/min, vorzugsweise zwischen 10 und 50 m/min und besonders vorzugsweise zwischen 20 und 40 m/min. Die Fasern werden auf eine Spule aufgewickelt und in Wasser gewaschen, bis der Restlösemittelgehalt kleiner 1% ist. Nachfolgend erfolgt eine Behandlung in Ethanol und Hexan. Die Fasern werden dann vorzugsweise zwischen Raumtemperatur und 150°C, besonders bevorzugt zwischen 50 und 100°c getrocknet. Man erhält Fasern mit Aussendurchmessern von 100 bis 1000 μm, bevorzugt zwischen 200 und 700 μm und besonders bevorzugt zwischen 250 und 400 μ.

Mit dem erfindungsgemäßen Verfahren erhält man somit Hohlfasermembranen aus Polyimiden, die hohe Trennleistungen für verschiedene Gase zeigen. Ein Auszug für verschiedene Polymere und Gase ist in Tabelle 2 zusammengefasst.

**Tabelle 2: Permeanzen verschiedener erfindungsgemäßer Polyimidhohlfasern bei Einzelgasmessungen**

| Polyimid polymer der Hohlfaser | Innendurchmesser [µm] | Aussendurchmesse r [µm] | Gas | Transmembrandruck [bar] | Permeanz [GPU] | Selektivität |
|---|---|---|---|---|---|---|
| P84 Typ70 | 250 | 412 | 02 | 5 | 1,45 | 8,8 |
| | 250 | 412 | N2 | 5 | 0,165 | |
| | 250 | 412 | CO2 | 5 | 6,0 | 72 |
| | 250 | 412 | CH4 | 5 | 0,084 | |
| | 250 | 412 | CO2 | 40 | 9,0 | 88 |
| | 250 | 412 | CH4 | 40 | 0,101 | |
| P84 T100 | 339 | 189 | 02 | 10 | 0,56 | 7,8 |
| | 339 | 189 | N2 | 10 | 0,072 | |
| | 339 | 189 | CO2 | 10 | 1,68 | 72 |
| | 339 | 189 | CH4 | 10 | 0,023 | |
| P84 HT | 174 | 300 | 02 | 9 | 0,65 | 8,4 |
| | 174 | 300 | N2 | 10 | 0,078 | |
| | 245 | 397 | CO2 | 10 | 2,60 | 58 |
| | 245 | 397 | CH4 | 9 | 0,044 | |

Weiters ist bemerkenswert, dass die Membranen auch bei hohen $CO_2$ Partialdrücken, kaum einen Anstieg in der Permeanz des Methans zeigen, ihre Selektivität behalten und daher kaum plastifizieren. Diese Eigenschaft ist notwendig zur Aufbereitung von Sauergasen mit hohen $CO_2$ Gehalten und hohen Drücken, wie dies zum Beispiel bei der Aufarbeitung von Roherdgas oder Rohbiogas der Fall ist.

Die Hohlfasermembranen können auch mit Aminen vernetzt werden. Wird die Hohlfaser vernetzt, so erfolgt dies im Anschluss an den Waschschritt. Zu diesem Zweck wird die Hohlfaser durch ein Bad geleitet, das ein Amin mit mindestens 2 Aminogruppen pro Molekül enthält wie z.B. ein Diamin, Triamin, Tetraamin oder ein Polyamin enthält. Das Amin kann primär oder sekundär sein, oder aus Mischungen von primären, sekundären und tertiären Aminen in einem Molekül bestehen. Als Amine kommen aliphatische und aromatische und gemischt aliphatisch-aromatische in Frage. Auch Amine auf Silikonbasis kommen in Frage. Als Beispiele für aliphatische Diamine kommen unter anderem aber nicht ausschließlich in Frage: Diaminoethan, Diaminopropan, Diaminobutan, Diamniopentan, Diaminohexan, Diaminoheptan, Diaminooctan, Diaminodecan oder Diaminoverbindungen von verzweigten oder cyclischen Aliphaten (z.B. cis- und trans -1,4- Cyclohexan) und längerkettigeren Verbindungen.

Als aromatische Verbindungen kommen unter anderem aber nicht ausschließlich in Frage: p-Phenylendiamine, m-Phenylendiamine, 2,4-Tolylendiamine, 2,6-Tolylendiamine, 4,4'-Diaminodiphenylether.

Als Bespiel für gemischt aliphatisch-aromatische Amine kommen unter anderem aber nicht ausschließlich in Frage: Aminoalkyl substituierte Aromaten wie z.B. p-Bis(aminomethyl)benzol.

Als Amine auf silikonischer Basis kommen unter anderem aber nicht ausschließlich in Frage: Bis(aminoalkyl)siloxane mit verschiedener Kettenlänge.

Als Vertreter von polyfunktionalen Amine kommen unter anderem aber nicht ausschließlich folgende Verbindungen in Frage: Oligo- bzw. Polyethylenimine mit verschiedenen Molmassen (400 bis 200 000 g/mol), N,N',N"-Trimethylbis-(hexamethylen)-triamin, Bis-(6-aminohexyl)-amin

Die Vernetzung erfolgt durch Einlegen in oder kontinuierliches Durchziehen der ganzen Hohlfaser durch eine Lösung des jeweiligen Diamins in Wasser oder einer Mischung aus Wasser und wassermischbaren Lösungsmitteln oder anderen Lösungsmitteln, die die Membranstruktur nicht beeinflussen und die die jeweiligen Amine lösen. Hierfür kommen zum Bespiel aber nicht ausschließlich in Frage:

- Alkohole wie z.B. Methanol, Ethanol, Isopropanol, Propanol, Butanol, Butandiol, Glycerin
- Ether wie z.B. Diethylether, Tetrahydrofuran, Dioxan oder Polyethylenglykole oder Polyethylenglykolether
- Aprotisch dipolare Lösungsmittel wie z.B. Dimethylformamid, Dimethylacetamid, N-Methylpyrrolidon, N-Ethylpyrrolidon, Tetramethylharnstoff, Dimethylsulfoxid oder Sulfolan
- Ketone wie z.B. Aceton oder Methylethylketon
- Andere wie Essigsäureethylester, Dichlormethan, Chloroform, Toluol, Xylol, Aliphaten und Cycloaliphaten wie Hexan, Heptan oder Cyclohexan.

Die Konzentration der Diamine beträgt zwischen 0,01 Gew.-% und 10 Gew.-%, vorzugsweise jedoch zwischen 0,05 Gew.-% und 5 Gew.-% und besonders vorzugsweise zwischen 0,1 Gew.-% und 1 Gew.-%.

Die Temperatur der Vernetzungslösung beträgt zwischen 1 und 100°C, vorzugsweise zwischen 10 und 70°C und besonders vorzugsweise zwischen 20 und 50°C.

Die Verweilzeit beträgt zwischen 10 Sekunden und 10 Stunden, vorzugsweise zwischen 1 Minuten und 60 Minuten und besonders vorzugsweise zwischen 2 und 10 min.

Zur Entfernung des restlichen Amins wird die Membran mit Wasser gewaschen. Die Waschbadstemperatur liegt zwischen 10 und 90°C, bevorzugt zwischen 20 und 60°C. Die Verweilzeit im Waschbad beträgt. 1 bis 200 Minuten, bevorzugt zwischen 2 und 50 Minuten und besonders bevorzugt zwischen 3 und 10 Minuten.

Man erhält Hohlfasern, die in herkömmlichen organischen Lösungsmitteln wie zum Beispiel aber nicht ausschließlich Dimethylformamid, Dimethylacetamid, N-Methylpyrrolidon, N-Ethylpyrrolidon, Tetramethylharnstoff, Dimethylsulfoxid oder Sulfolan, Aceton, Methylethylketon, Diethylether, Tetrahydrofuran, Dioxan, Essigsäureethylester, Dichlormethan, Chloroform, Toluol, Xylol, Hexan, Heptan oder Cyclohexan nicht mehr löslich sind. Sie können daher in der Nano-, Ultra- und Microfiltration in organischen Lösungsmitteln eingesetzt werden.

Herstellung der Flachmembranen

Die mit Additiven versetzte und entgaste Lösung wird in die Rakel einer Flachmembrangießanlage blasenfrei gegossen. Die Rakelbreite kann bis zu 1,2 m betragen Unter der Rakel läuft ein kalandriertes Trägervlies aus Kunststofffasern, vorzugsweise aber nicht ausschließlich aus Polyimid, Polypropylen, Polyamid, Polyester oder Polyphenylensulfid, mit einer Geschwindigkeit von 0,1 bis 10 m/min und vorzugsweise 1 bis 5 m/min. Die Dicke des Vlieses beträgt zwischen 30 und 300 $\mu$, vorzugsweise zwischen 100 und 200 $\mu$. Das Flächengewicht beträgt zwischen 20 und 300 g/$m^2$, vorzugsweise zwischen 50 und 150 g/$m^2$. Die Spaltbreite zwischen Rakel und Vlies beträgt zwischen 100 und

800 μ, vorzugsweise zwischen 200 und 400 μ. Das beschichtete Vlies tritt in einen Kanal ein, der mit einem Gasstrom im Gegenstrom durchflutet ist. Als Gase kommen unter anderem aber nicht ausschließlich trockene Luft, Stickstoff, Argon oder Helium in Frage. Die Gasgeschwindigkeit, mit der das beschichtete Vlies überströmt wird, bewegt sich hier im Bereich von 100 bis 5.000 m/h, vorzugsweise zwischen 200 und 1.000 m/h, die Temperaturen des Gases können zwischen 10 und 150°C, bevorzugt zwischen 15 und 90°C sein. Das beschichtete Vlies tritt dann in ein Fällbad ein, das Polymer koaguliert und formt die gewünschte Membran. Das Fällbad besteht aus Wasser oder Mischungen aus Wasser und einem oder mehreren Lösungsmitteln, die mit Wasser mischbar sind.

Hierfür kommen in Frage:

- Alkohole wie z.B. Methanol, Ethanol, Isopropanol, Propanol, Butanol, Butandiol, Glycerin
- Ether wie z.B. Diethylether, Tetrahydrofuran, Dioxan oder Polyethylenglykole oder Polyethylenglykolether
- Aprotisch dipolare Lösungsmittel wie z.B. Dimethylformamid, Dimethylacetamid, N-Methylpyrrolidon, N-Ethylpyrrolidon, Tetramethylharnstoff, Dimethylsulfoxid oder Sulfolan
- Ketone wie z.B. Aceton oder Methylethylketon.

Die Fällbadtemperatur beträgt zwischen 1 und 90°C, bevorzugt zwischen 10 und 50°C. Nach einer kurzen Verweilzeit von 10 s bis 10 min, bevorzugt 1 bis 5 min wird die Membran im nassen Zustand aufgewickelt.

Zur Entfernung des restlichen Lösungsmittels wird die Membran mit Wasser gewaschen. Die Waschbadstemperatur liegt zwischen 10 und 90°C, bevorzugt zwischen 20 und 60°C. Die Verweilzeit im Waschbad beträgt. 1 bis 200 Minuten, bevorzugt zwischen 2 und 50 Minuten und besonders bevorzugt zwischen 3 und 10 Minuten.

Wird die Membran vernetzt, so erfolgt dies im Anschluss an den Waschschritt. Zu diesem Zweck wird die Membran durch ein Bad geleitet, das ein Amin mit mindestens 2 Amine pro Molekül enthält wie z.B. ein Diamin, Triamin, Tetraamin oder ein Polyamin enthält. Das Amin kann Primär oder sekundär sein, oder aus Mischungen von primären, sekundären und tertiären Aminen in einem Molekül bestehen. Als Amine kommen aliphatische und aromatische und gemischt aliphatisch-aromatische in Frage. Auch Amine auf Silikonbasis kommen in Frage.

Als Beispiele für aliphatische Diamine kommen unter anderem aber nicht ausschließlich in Frage: Diaminoethan, Diaminopropan, Diaminobutan, Diamniopentan, Diaminohexan, Diaminoheptan, Diaminooctan, Diaminodecan oder Diaminoverbindungen von verzweigten oder cyclischen Aliphaten (z.B. cis- und trans -1,4- Cyclohexan) und längerkettigeren Verbindungen.

Als aromatische Verbindungen kommen unter anderem aber nicht ausschließlich in Frage: p-Phenylendiamine, m-Phenylendiamine, 2,4-Tolylendiamine, 2,6-Tolylendiamine, 4,4'-Diaminodiphenylether.

Als Bespiel für gemischt aliphatische-aromatische Amine kommen unter anderem aber nicht ausschließlich in Frage: Aminoalkyl substituierte Aromaten wie z.B. p-Bis(aminomethyl)benzol.

Als Amine auf silikonischer Basis kommen unter anderem aber nicht ausschließlich in Frage: Bis(aminoalkyl)siloxane mit verschiedener Kettenlänge. Als Vertreter von polyfunktionalen Amine kommen unter anderem aber nicht ausschließlich folgende Verbindungen in Frage: Oligo- bzw. Polyethylenimine mit verschiedenen Molmassen (400 bis 200 000 g/mol), N,N',N"-Trimethylbis-(hexamethylen)-triamin, Bis-(6-aminohexyl)-amin

Die Vernetzung erfolgt durch einlegen der ganzen Membran in eine Lösung des jeweiligen Diamins in Wasser oder einer Mischung aus Wasser und wassermischbaren Lösungsmitteln oder anderen Lösungsmitteln, die die Membranstruktur nicht beeinflussen und die jeweiligen Amine lösen.

Hierfür kommen zum Bespiel aber nicht ausschließlich in Frage:

- Alkohole wie z.B. Methanol, Ethanol, Isopropanol, Propanol, Butanol, Butandiol, Glycerin
- Ether wie z.B. Diethylether, Tetrahydrofuran, Dioxan oder Polyethylenglykole oder Polyethylenglykolether
- Aprotisch dipolare Lösungsmittel wie z.B. Dimethylformamid, Dimethylacetamid, N-Methylpyrrolidon, N-Ethylpyrrolidon, Tetramethylharnstoff, Dimethylsulfoxid oder Sulfolan
- Ketone wie z.B. Aceton oder Methylethylketon
- Andere wie Essigsäureethylester, Dichlormethan, Chloroform, Toluol, Xylol, Aliphaten und Cycloaliphaten wie Hexan, Heptan oder Cyclohexan.

Die Konzentration der Diamine, die Temperatur der Vernetzungslösung, die Verweilzeit und die Durchführung des Waschschritts entsprechen den oben für die Vernetzung der Hohlfasern angegebenen Werten bzw. Vorgehensweisen.

Nach den Wasch- bzw. Vernetzungsvorgängen wird die Membran imprägniert, um ein Konservierung der Poren beim nachfolgenden Trockenprozess zu gewährleisten. Dies erfolgt durch Eintauchen der Membran in eine Mischung aus Wasser und einem mit Wasser mischbaren Hochsieder.

Hier kommen zum Beispiel aber nicht ausschließlich in Frage: Glycerin, Polyethylenglykole verschiedener Kettenlänge in Mischung oder einzeln, Polyethylenglykoldialkylether verschiedener Kettenlängen in Mischung oder einzeln als Methyl- oder Ethyl-Ether, Mono- oder Diole mit einem Siedepunkt über 200°C wie zum Beispiel Decanol, 1,4-Butandiol, 1,6-Hexandiol.

Die Konzentration der Hochsieder im Wasser beträgt zwischen 5 % und 95%, vorzugsweise jedoch zwischen 25 Gew.-% und 75 Gew.-%. Die Temperatur der Imprägnierlösung beträgt zwischen 1 und 100°C, vorzugsweise zwischen 10 und 70°C und besonders vorzugsweise zwischen 20 und 50°C.

Die Verweilzeit beträgt zwischen 10 Sekunden und 10 Stunden, vorzugsweise zwischen 1 Minuten und 60 Minuten und besonders vorzugsweise zwischen 2 und 10 min.

Nach der Imprägnierung erfolgt die Trocknung der Membran. Die Trocknen kann an der Umgebungsluft erfolgen oder kontinuierlich in einem Konvektionstrockner. Die Temperatur der Trocknung liegt im Bereich von 20 bis 200°C, vorzugsweise zwischen 50 und 120°C. Die Trockendauer liegt zwischen 10 Sekunden und 10 Stunden, vorzugsweise zwischen 1 Minuten und 60 Minuten und besonders vorzugsweise zwischen 2 und 10 min. Nach der Trocknung wird die fertige Membran aufgewickelt und kann weiter zu Spiralwickelelementen oder Taschenmodulen verarbeitet werden.

Die erfindungsgemäßen Flach- und Hohlfasermembranen zeichnen sich somit dadurch aus, dass sie ein Polyimid umfasst, welches ein Mp > 100 000 $g.mol^{-1}$, bevorzugt 110 000 bis 200 000 $g.mol^{-1}$, besonders bevorzugt 120 000 bis 170 000 $g.mol^{-1}$ und einen PDI im Bereich von 1,7 bis 2,3, bevorzugt 1,8 bis 2,1 aufweisen. Mp entspricht dabei dem PeakMaximum der Molmassenverteilung bei einer Kalibrierung gegen Polystyrolstandards in 0,01 mol/l Lithiumbromid in Dimethylformamid.

Die hohe Molmasse bewirkt eine Verbesserung der mechanischen Eigenschaften hinsichtlich Festigkeit und Zähigkeit der Membranen. Dies ist vor allem bei hohen Drücken in den Applikationen erforderlich. So müssen die Flachmembranen im Betrieb mindestens 40 bar aushalten, gewisse Hohlfasermembranen in der Erdgasaufbereitung über 100 bar.

Eine hohe Molmasse ist auch vorteilhaft, um eine genügend hohe Viskosität auch bei moderaten Feststoffgehalten einzustellen. Die Gießlösungen brauchen eine gewisse Viskosität, um stabil zu Membranen und Hohlfasern verarbeitet werden zu können und dass damit dichte und selektive Schichten an der Oberfläche hergestellt werden können.

Herstellungsbeispiele

Die nachfolgenden Beispiele dienen zur näheren Erläuterung und zum besseren Verständnis der vorliegenden Erfindung, schränken diese jedoch in keiner Weise ein.

Herstellung der Polyimidlösungen

**Beispiel 1: Herstellung einer Polyimidlösung P84 Typ70 in Dimethylacetamid**

In einem 3 1 Glasreaktor ausgestattet mit Rührwerk und Rückflusskühler werden 1622 g Dimethylacetamid wasserfrei vorgelegt. Darin werden 456,4 g 3,3',4,4'-Benzophenontetracarbonsäuredianhydrid gelöst und auf 90°C aufgeheizt. Zu dieser Lösung werden 0,45 g Natriumhydroxid gegeben. Unter Stickstoffbeaufschlagung werden 266,8 g einer Mischung aus 64 % 2,4-Tolylendiisocyanat, 16 % 2,6-Tolylendiisocyanat und 20% 4,4'-Diisocyanatodiphenylmethan während mehrerer Stunden zudosiert. Dabei entweicht CO2 als Nebenprodukt und es entsteht direkt ein Polyimid in Lösung.

Man erhält eine goldenfarbige hochviskose Lösung mit einem Feststoffgehalt von 25% und einer Viskosität von 49 Pa.s..

Die Ermittlung der Molmassen mittels
Gelpermationschromatographie ergibt folgende Werte: Mn=80 600 $g.mol^{-1}$, Mp= 139600 $g.mol^{-1}$, Mw=170000 $g.mol^{-1}$
PDI = 2,11

**Beispiel 2: Herstellung einer Polyimidlösung P84 Typ70 in Dimethylformamid**

In einem 3 1 Glasreaktor ausgestattet mit Rührwerk und Rückflusskühler werden 1622 g Dimethylformamid wasserfrei vorgelegt. Darin werden 456,4 g 3,3',4,4'-Benzophenontetracarbonsäuredianhydrid gelöst und auf 90°C aufgeheizt. Zu dieser Lösung werden 0,45 g Natriumhydroxid gegeben. Unter Stickstoffbeaufschlagung werden 266,8 g einer Mischung aus 64 % 2,4-Tolylendiisocyanat, 16 % 2,6-Tolylendiisocyanat und 20% 4,4'-Diisocyanatodiphenylmethan während mehrerer Stunden zudosiert. Dabei entweicht CO2 als Nebenprodukt und es entsteht direkt ein Polyimid in Lösung.

Man erhält eine goldenfarbige hochviskose Lösung mit einem Feststoffgehalt von 27% und einer Viskosität von 48 Pa.s.. Die Ermittlung der Molmassen mittels
Gelpermationschromatographie ergibt folgende Werte: Mn=76 600$g.mol^{-1}$, Mp= 130500 $g.mol^{-1}$, Mw=146200 $g.mol^{-1}$

PDI = 1,91

**Beispiel 3: Herstellung einer Polyimidlösung P84 Typ70 in N-Methylpyrrolidon**

In einem 3 1 Glasreaktor ausgestattet mit Rührwerk und Rückflusskühler werden 1800 g N-Methylpyrrolidon wasserfrei vorgelegt. Darin werden 456,4 g 3,3',4,4'-Benzophenontetracarbonsäuredianhydrid gelöst und auf 90°C aufgeheizt. Zu dieser Lösung werden 0,45 g Natriumhydroxid gegeben. Unter Stickstoffbeaufschlagung werden 266,8 g einer Mischung aus 64 % 2,4-Tolylendiisocyanat, 16 % 2,6-Tolylendiisocyanat und 20% 4,4'-Diisocyanatodiphenylmethan während mehrerer Stunden zudosiert. Dabei entweicht CO2 als Nebenprodukt und es entsteht direkt ein Polyimid in Lösung.

Man erhält eine goldenfarbige hochviskose Lösung mit einem Feststoffgehalt von 25% und einer Viskosität von 45 Pa.s..

Die Ermittlung der Molmassen mittels
Gelpermationschromatographie ergibt folgende Werte: Mn=65700 g.mol$^{-1}$, Mp= 107200 g.mol$^{-1}$, Mw=147000 g.mol$^{-1}$ PDI = 2,24

**Beispiel 4: Herstellung einer Polyimidlösung P84 Typ70 in N-Ethylpyrrolidon**

In einem 3 1 Glasreaktor ausgestattet mit Rührwerk und Rückflusskühler werden 1622 g N-Ethylpyrrolidon wasserfrei vorgelegt. Darin werden 456,4 g 3,3',4,4'-Benzophenontetracarbonsäuredianhydrid gelöst und auf 90°C aufgeheizt. Zu dieser Lösung werden 0,45 g Natriumhydroxid gegeben. Unter Stickstoffbeaufschlagung werden 266,8 g einer Mischung aus 64 % 2,4-Tolylendiisocyanat, 16 % 2,6-Tolylendiisocyanat und 20% 4,4'-Diisocyanatodiphenylmethan während mehrerer Stunden zudosiert. Dabei entweicht CO2 als Nebenprodukt und es entsteht direkt ein Polyimid in Lösung.

Man erhält eine goldenfarbige hochviskose Lösung mit einem Feststoffgehalt von 27% und einer Viskosität von 87 Pa.s..

Die Ermittlung der Molmassen mittels
Gelpermationschromatographie ergibt folgende Werte: Mn=64 600g.mol$^{-1}$, Mp= 105200 g.mol$^{-1}$, Mw=144700 g.mol$^{-1}$ PDI = 2,24

**Beispiel 5: Herstellung einer Polyimidlösung P84 T100 in Dimethylformamid**

In einem 3 I Glasreaktor ausgestattet mit Rührwerk und Rückflusskühler werden 1800 g Dimethylformamid wasserfrei vorgelegt. Darin werden 473,6 g 3,3',4,4'-Benzophenontetracarbonsäuredianhydrid gelöst und auf 90°C aufgeheizt. Zu dieser Lösung werden 1,8 g Diazabicyclooctan gegeben. Unter Stickstoffbeaufschlagung werden 254,4 g 2,4-Tolylendiisocyanat während mehrerer Stunden zudosiert. Dabei entweicht CO2 als Nebenprodukt und es entsteht direkt ein Polyimid in Lösung.

Man erhält eine goldenfarbige hochviskose Lösung mit einem Feststoffgehalt von 25% und einer Viskosität von 59 Pa.s..

Die Ermittlung der Molmassen mittels
Gelpermationschromatographie ergibt folgende Werte: Mn = 82 100 g.mol$^{-1}$, Mp = 151 500 g.mol$^{-1}$, Mw = 181 900 g.mol$^{-1}$ PDI = 2,21

**Beispiel 6: Herstellung einer Polyimidlösung P84 T80 in Dimethylformamid**

In einem 3 1 Glasreaktor ausgestattet mit Rührwerk und Rückflusskühler werden 1622 g Dimethylformamid wasserfrei vorgelegt. Darin werden 473,6 g 3,3',4,4'-Benzophenontetracarbonsäuredianhydrid gelöst und auf 90°C aufgeheizt. Zu dieser Lösung werden 1,8 g Diazabicyclooctan gegeben. Unter Stickstoffbeaufschlagung werden 254,4 g einer Mischung von 80% 2,4-Tolylendiisocyanat und 20% 2,6-Tolylendiisocynat während mehrerer Stunden zudosiert. Dabei entweicht CO2 als Nebenprodukt und es entsteht direkt ein Polyimid in Lösung.

Man erhält eine goldenfarbige hochviskose Lösung mit einem Feststoffgehalt von 27% und einer Viskosität von 108 Pa.s..

Die Ermittlung der Molmassen mittels
Gelpermationschromatographie ergibt folgende Werte: Mn = 83 800 g.mol$^{-1}$, Mp = 152 300 g.mol$^{-1}$, Mw = 173 800 g.mol$^{-1}$ PDI = 2,07

**Beispiel 7: Herstellung einer Polyimidlösung P84 HT in Dimethylformamid**

In einem 3 1 Glasreaktor ausgestattet mit Rührwerk und Rückflusskühler werden 1800 g Dimethylformamid wasserfrei vorgelegt. Darin werden 316,4 g 3,3',4,4'-Benzophenontetracarbonsäuredianhydrid und 142,8 g Pyromellitsäuredianhydrid gelöst und auf 90°C aufgeheizt. Zu dieser Lösung werden 1,8 g Diazabicyclooctan gegeben. Unter Stickstoffbeaufschlagung werden 283,4 g einer Mischung von 80% 2,4-Tolylendiisocyanat und 20% 2,6-Tolylendiisocynat während mehrerer Stunden zudosiert. Dabei entweicht CO2 als Nebenprodukt und es entsteht direkt ein Polyimid in Lösung.

Man erhält eine goldenfarbige hochviskose Lösung mit einem Feststoffgehalt von 27% und einer Viskosität von 70 Pa.s..

Die Ermittlung der Molmassen mittels

Gelpermationschromatographie ergibt folgende Werte: Mn = 75.500 $g.mol^{-1}$, Mp = 122.200 $g.mol^{-1}$, Mw = 150.900 $g.mol^{-1}$ PDI = 2,00

**Beispiel 8: Herstellung einer Polyimidlösung P84 MDI in Dimethylformamid**

In einem 3 I Glasreaktor ausgestattet mit Rührwerk und Rückflusskühler werden 1500 g Dimethylformamid wasserfrei vorgelegt. Darin werden 369,2 g 3,3',4,4'-Benzophenontetracarbonsäuredianhydrid gelöst und auf 90°C aufgeheizt. Zu dieser Lösung werden 1,5 g Diazabicyclooctan gegeben. Unter Stickstoffbeaufschlagung werden 222,3 g 2,4,6-Trimethyl-1,3-phenylendiisocyanat während mehrerer Stunden zudosiert. Dabei entweicht CO2 als Nebenprodukt und es entsteht direkt ein Polyimid in Lösung.

Man erhält eine hellgelbe viskose Lösung mit einem Feststoffgehalt von 25% und einer Viskosität von 5 Pa.s..

Die Ermittlung der Molmassen mittels

Gelpermeationschromatographie ergibt folgende Werte: Mn = 55 200 $g.mol^{-1}$, Mp = 95 000 $g.mol^{-1}$, Mw = 112 000 $g.mol^{-1}$ PDI = 2,03

Folienherstellung und intrinsische Gaspermeabilitäten

Die Polymerisationslösungen werden unverdünnt durch ein 15 μ Metalsieb filtiert. Zur Herstellung der Folien dient ein Gerät der Firma Elcometer (Elcometer 4340) mit einer Rakel. Es werden Glasplatten mit Hilfe einer Rakel und einem Spaltmaß von 250 μ mit den Polymerlösungen beschichtet. Das Lösungsmittel wird nachfolgende im Umlufttrockenschrank bei 70°C (0,5 h), 150°C (2 h) und 250°C (12h) abgedampft. Die Folien sind dann praktisch frei von Lösungsmitteln (Gehalt < 0,1%) und werden von den Glasplatten gelöst. Man erhält Folien mit einer Dicke von ca. 30 bis 40 μm. Keine der Folien war brüchig, alle zeigten gute mechanische Eigenschaften. Aus diesen Folien werden dann mittels Mikroskop fehlerfreie Stellen gesucht und kreisrunde Proben mit einem Durchmesser von 46 mm ausgeschnitten. Diese werden dann in die selbstgebaute Gaspermeationsapparatur eingelegt und die Permeabilität verschiedener Gase nach der Vakuummethode bestimmt.

Hierbei werden die Folien mit einem Einzelgas (z.B. Stickstoff, Sauerstoff, Methan oder Kohlendioxid) bei verschiedenen Drücken beaufschlagt und die Zunahme des Druckes auf der Permeatseite aufgezeichnet. Daraus wird die Permeabilität in Barrer (10-6 $cm^3.cm^{-2}.s^{-1}.cmHg^{-1}$) berechnet. Nachfolgend sind einige Beispiele angeführt.

**Beispiel 9: Gaspermeabilitäten der verschiedener Polymere aus obigen Beispielen**

| Polymer | Dicke (μm) | Gas | Transmembrandruck (Bar) | Permeabilität (Barrer) | Selektivität |
|---|---|---|---|---|---|
| Beispiel 2 (P84 Typ70) | | O2 | | 0,182 | 10,0 |
| | | N2 | | 0,018 | |
| | | CO2 | | 0,571 | 67,2 |
| | | CH4 | | 0,008 | |
| Beispiel 5 (P84 T100) | 37,9 | O2 | 10,9 | 0,250 | 30,9 |
| | 37,9 | N2 | 11,0 | 0,008 | |
| | 37,9 | CO2 | 25,2 | 0,622 | 124 |
| | 37,9 | CH4 | 17,5 | 0,005 | |

(fortgesetzt)

| Polymer | Dicke (μm) | Gas | Transmembrandruck (Bar) | Permeabilität (Barrer) | Selektivität |
|---|---|---|---|---|---|
| Beispiel 6 (P84 T80) | 36,0 | O2 | 10,7 | 0,280 | 21,2 |
| | 36,0 | N2 | 11,1 | 0,013 | |
| | 36,0 | CO2 | 28,4 | 0,696 | 237 |
| | 36,0 | CH4 | 31,5 | 0,003 | |
| Beispiel 7 (P84 HT) | 41,2 | O2 | 12,0 | 0,53 | 13,2 |
| | 41,2 | N2 | 12,3 | 0,04 | |
| | 41,6 | CO2 | 36,8 | 1,69 | 169 |
| | 41,6 | CH4 | 36,4 | 0,01 | |

Additivierung der Polymerisationslösung

**Beispiel 10: Herstellung einer Gießlösung aus P84 Typ70 zur Herstellung von Polyimidhohlfasern**

In einem 3 l Rührkessel aus Glas mit starkem Rührwerk werden bei Raumtemperatur 1168 g P84 Typ 70 Lösung in Dimethylformamid aus Beispiel 2 tropfenweise mit einer Mischung aus 94,1 g Tetrahydrofuran und 40,3 g Isopropanol versetzt. Das Polymer fällt dabei an der Eintropfstelle kurzzeitig aus, löst sich aber gleich wieder auf. Es wird gerührt bis eine homogene Lösung entsteht. Diese wird dann durch ein Sieb mit einer Maschenweite von 15μ filtriert und 2 Tage ohne Rühren stehen gelassen. Man erhält eine Gießlösung mit einem Feststoffgehalt von 23,5 %, einem Dimethylformamidgehalt von 66,5%, einem Tetrahydrofurangehalt von 7% und einem Isopropanolgehalt von 3%

**Beispiel 11: Herstellung einer GieBlösung aus P84 Typ70 zur Herstellung von Polyimidhohlfasern**

In einem 3 1 Rührkessel aus Glas mit starkem Rührwerk werden bei Raumtemperatur 1034 g P84 Typ 70 Lösung in Dimethylformamid aus Beispiel 2 tropfenweise mit einer Mischung aus 58,6 g Tetrahydrofuran und 46,9 g Isopropanol versetzt. Das Polymer fällt dabei an der Eintropfstelle kurzzeitig aus, löst sich aber gleich wieder auf. Es wird gerührt bis eine homogene Lösung entsteht. Diese wird dann durch ein Sieb mit einer Maschenweite von 15μ filtriert und 2 Tage ohne Rühren stehen gelassen. Man erhält eine Gießlösung mit einem Feststoffgehalt von 23,8 %, einem Dimethylformamidgehalt von 67,2%, einem Tetrahydrofurangehalt von 5% und einem Isopropanolgehalt von 4%

**Beispiel 12: Herstellung einer Gießlösung aus P84 HT zur Herstellung von Polyimidhohlfasern**

In einem 3 1 Rührkessel aus Glas mit starkem Rührwerk werden bei Raumtemperatur 1034 g P84 HT Lösung in Dimethylformamid aus Beispiel 7 tropfenweise mit einer Mischung aus 47 g Tetrahydrofuran und 65 g Isopropanol versetzt. Das Polymer fällt dabei an der Eintropfstelle kurzzeitig aus, löst sich aber gleich wieder auf. Es wird gerührt bis eine homogene Lösung entsteht. Diese wird dann durch ein Sieb mit einer Maschenweite von 15μ filtriert und 2 Tage ohne Rühren stehen gelassen. Man erhält eine Gießlösung mit einem Feststoffgehalt von 23,6 %, einem Dimethylformamidgehalt von 66,9%, einem Tetrahydrofurangehalt von 4% und einem Isopropanolgehalt von 5,5%

**Beispiel 13: Herstellung einer Gießlösung aus P84 T100 zur Herstellung von Polyimidhohlfasern**

In einem 3 1 Rührkessel aus Glas mit starkem Rührwerk werden bei Raumtemperatur 1034 g P84 T100 Lösung in Dimethylformamid aus Beispiel 5 tropfenweise mit einer Mischung aus 46,8 g Tetrahydrofuran und 58,5 g Isopropanol versetzt. Das Polymer fällt dabei an der Eintropfstelle kurzzeitig aus, löst sich aber gleich wieder auf. Es wird gerührt bis eine homogene Lösung entsteht. Diese wird dann durch ein Sieb mit einer Maschenweite von 15μ filtriert und 2 Tage ohne Rühren stehen gelassen. Man erhält eine Gießlösung mit einem Feststoffgehalt von 22,1 %, einem Dimethylformamidgehalt von 68,9%, einem Tetrahydrofurangehalt von 5% und einem Isopropanolgehalt von 4%

**Beispiel 14: Herstellung einer Gießlösung aus P84 Typ 70 zur Herstellung von Flachmembranen für die organophile Nanofiltration**

In einem 3 1 Rührkessel aus Glas mit starkem Rührwerk werden bei Raumtemperatur 1034 g P84 Typ 70

Lösung in Dimethylformamid aus Beispiel 2 tropfenweise mit 258,5 g Tetrahydrofuran versetzt. Es wird gerührt bis eine homogene Lösung entsteht. Diese wird dann durch ein Sieb mit einer Maschenweite von 15μ filtriert und 2 Tage ohne Rühren stehen gelassen. Man erhält eine Gießlösung mit einem Feststoffgehalt von 21,6 %, einem Dimethylformamidgehalt von 58,4 % und einem Tetrahydrofurangehalt von 20 %

Hohlfaserherstellung

**Beispiel 15: Hohlfaserherstellung aus einer Gießlösung mit P84 Typ 70 in Dimethylformamid aus Beispiel 10**

Die entgaste, filtrierte und mit Additiven versetzte Lösung aus P84 Typ 70 in Dimethylformamid aus Beispiel 10 wird auf 50°C thermostatisiert und mittels einer Zahnradpumpe durch eine Zweistoffdüse gefördert. Der Fluss beträgt 162 g/h. Während im Außenbereich der Zweistoffdüse die Polymerlösung gefördert wird, wird innen eine Mischung von 70% Dimethylformamid und 30% Wasser gefördert, um das Loch der Hohlfaser zu produzieren. Der Fluss beträgt 58 ml/h. Nach einem Abstand von 40 cm tritt die Hohlfaser in 10°C kaltes Wasser ein. Hierbei wird die Hohlfaser mit einem Rohr umhüllt. Dieses Rohr wird mit einem Stickstoffstrom von 2 1/min durchflutet, die Rohrinnentemperatur beträgt 41°C. Die Faser wird dann durch ein Wasserwaschbad gezogen und schließlich mit einer Geschwindigkeit von 15 m/min aufgewickelt. Nach einer Extraktion mit Wasser über mehrere Stunden werden die Hohlfasern zuerst in Ethanol und dann in Heptan getaucht und anschließend an der Luft getrocknet. Man erhält Hohlfasern mit einem Außendurchmesser von 412 μ, einem Lochdurchmesser von 250 μ und einer Wandstärke von 81 μ.

Einzelgasmessungen ergeben folgende Permeanzen der Hohlfasern bei einem Transmembrandruck von 5 bar:

Sauerstoff: 1,450 GPU
Stickstoff: 0,165 GPU
Kohlendioxid: 6,03 GPU
Methan: 0,084 GPU

Die Einzelgasselektivitäten betragen somit zwischen Sauerstoff und Stickstoff 8,8 und zwischen Kohlendioxid und Methan 71,9

Einzelgasmessungen ergeben folgende Permeanzen der Hohlfasern bei einem Transmembrandruck von 40 bar:

Kohlendioxid: 8,99 GPU
Methan: 0,101 GPU

Die Einzelgasselektivitäten betragen zwischen Kohlendioxid und Methan 88,5

**Beispiel 16: Hohlfaserherstellung aus einer Gießlösung mit P84 Typ 70 in Dimethylformamid aus Beispiel 11**

Die entgaste, filtrierte und mit Additiven versetzte Lösung aus P84 Typ 70 in Dimethylformamid aus Beispiel 11 wird auf 50°C thermostatisiert und mittels einer Zahnradpumpe durch eine Zweistoffdüse gefördert. Der Fluss beträgt 162 g/h. Während im Außenbereich der Zweistoffdüse die Polymerlösung gefördert wird, wird innen eine Mischung von 70% Dimethylformamid und 30% Wasser gefördert, um das Loch der Hohlfaser zu produzieren. Der Fluss beträgt 58 ml/h. Nach einem Abstand von 42 cm tritt die Hohlfaser in 10°C kaltes Wasser ein. Hierbei wird die Hohlfaser mit einem Rohr umhüllt. Dieses Rohr wird mit einem Stickstoffstrom von 2 1/min durchflutet, die Rohrinnentemperatur beträgt 46°C. Die Faser wird dann durch ein Wasserwaschbad gezogen und schließlich mit einer Geschwindigkeit von 24 m/min aufgewickelt. Nach einer Extraktion mit Wasser über mehrere Stunden werden die Hohlfasern zuerst in Ethanol und dann in Heptan getaucht und anschließend an der Luft getrocknet. Man erhält Hohlfasern mit einem Außendurchmesser von 310 μ, einem Lochdurchmesser von 188 μ und einer Wandstärke von 61 μ.

Einzelgasmessungen ergeben folgende Permeanzen der Hohlfasern bei einem Transmembrandruck von 9 bar:

Sauerstoff: 1,463 GPU
Stickstoff: 0,164 GPU

Die Einzelgasselektivitäten betragen somit zwischen Sauerstoff und Stickstoff 8,9

**Beispiel 17: Hohlfaserherstellung aus einer Gießlösung mit P84 T100 in Dimethylformamid aus Beispiel 13**

Die entgaste, filtrierte und mit Additiven versetzte Lösung aus P84 T100 in Dimethylformamid aus Beispiel 13

wird auf 50°C thermostatisiert und mittels einer Zahnradpumpe durch eine Zweistoffdüse gefördert. Der Fluss beträgt 162 g/h. Während im Außenbereich der Zweistoffdüse die Polymerlösung gefördert wird, wird innen eine Mischung von 70% Dimethylformamid und 30% Wasser gefördert, um das Loch der Hohlfaser zu produzieren. Der Fluss beträgt 58 ml/h. Nach einem Abstand von 42 cm tritt die Hohlfaser in 10°C kaltes Wasser ein. Hierbei wird die Hohlfaser mit einem Rohr umhüllt. Dieses Rohr wird mit einem Stickstoffstrom von 2 l/min durchflutet, die Rohrinnentemperatur beträgt 46°C. Die Faser wird dann durch ein Wasserwaschbad gezogen und schließlich mit einer Geschwindigkeit von 20 m/min aufgewickelt. Nach einer Extraktion mit Wasser über mehrere Stunden werden die Hohlfasern zuerst in Ethanol und dann in Heptan getaucht und anschließend an der Luft getrocknet. Man erhält Hohlfasern mit einem Außendurchmesser von 339 μ, einem Lochdurchmesser von 189 μ und einer Wandstärke von 75 μ.

Einzelgasmessungen ergeben folgende Permeanzen der Hohlfasern bei einem Transmembrandruck von 9 bar:

Sauerstoff: 0,564 GPU
Stickstoff: 0,072GPU
Kohlendioxid:1,679
Methan: 0,023

Die Einzelgasselektivitäten betragen somit zwischen Sauerstoff und Stickstoff 7,8 und zwischen Kohlendioxid und Methan 71,6

**Beispiel 18: Hohlfaserherstellung aus einer Gießlösung mit P84 HT in Dimethylformamid aus**

Die entgaste, filtrierte und mit Additiven versetzte Lösung aus P84 HT in Dimethylformamid aus Beispiel 12 wird auf 50°C thermostatisiert und mittels einer Zahnradpumpe durch eine Zweistoffdüse gefördert. Der Fluss beträgt 162 g/h. Während im Außenbereich der Zweistoffdüse die Polymerlösung gefördert wird, wird innen eine Mischung von 70% Dimethylformamid und 30% Wasser gefördert, um das Loch der Hohlfaser zu produzieren. Der Fluss beträgt 58 ml/h. Nach einem Abstand von 15 cm tritt die Hohlfaser in 10°C kaltes Wasser ein. Hierbei wird die Hohlfaser mit einem Rohr umhüllt. Dieses Rohr wird mit einem Stickstoffstrom von 1 1/min durchflutet, die Rohrinnentemperatur beträgt 40°C. Die Faser wird dann durch ein Wasserwaschbad gezogen und schließlich mit einer Geschwindigkeit von 24 m/min aufgewickelt. Nach einer Extraktion mit Wasser über mehrere Stunden werden die Hohlfasern zuerst in Ethanol und dann in Heptan getaucht und anschließend an der Luft getrocknet. Man erhält Hohlfasern mit einem Außendurchmesser von 306 μ, einem Lochdurchmesser von 180 μ und einer Wandstärke von 63 μ.

Einzelgasmessungen ergeben folgende Permeanzen der Hohlfasern bei einem Transmembrandruck von 10 bar:

Kohlendioxid: 6,0 GPU
Methan: 0,2 GPU

Die Einzelgasselektivitäten betragen somit zwischen Kohlendioxid und Methan 30

**Beispiel 19: Hohlfaserherstellung aus einer Polymerisationslösung aus P84 HT in Dimethylformamid aus Beispiel 7**

Die entgaste und filtrierte Lösung aus P84 HT in Dimethylformamid aus Beispiel 7 wird auf 50°C thermostatisiert und mittels einer Zahnradpumpe durch eine Zweistoffdüse gefördert. Der Fluss beträgt 162 g/h. Während im Außenbereich der Zweistoffdüse die Polymerlösung gefördert wird, wird innen eine Mischung von 70% Dimethylformamid und 30% Wasser gefördert, um das Loch der Hohlfaser zu produzieren. Der Fluss beträgt 58 ml/h. Nach einem Abstand von 15 cm tritt die Hohlfaser in 10°C kaltes Wasser ein. Hierbei wird die Hohlfaser mit einem Rohr umhüllt. Dieses Rohr wird mit einem Stickstoffstrom von 1 1/min durchflutet, die Rohrinnentemperatur beträgt 70°C. Die Faser wird dann durch ein Wasserwaschbad gezogen und schließlich mit einer Geschwindigkeit von 24 m/min aufgewickelt. Nach einer Extraktion mit Wasser über mehrere Stunden werden die Hohlfasern zuerst in Ethanol und dann in Heptan getaucht und anschließend an der Luft getrocknet. Man erhält Hohlfasern mit einem Außendurchmesser von 307 μ, einem Lochdurchmesser von 189 μ und einer Wandstärke von 59 μ.

Einzelgasmessungen ergeben folgende Permeanzen der Hohlfasern bei einem Transmembrandruck von 10 bar:

Kohlendioxid: 3,37 GPU
Methan: 0,051 GPU

Die Einzelgasselektivitäten betragen somit zwischen Kohlendioxid und Methan 66.

Die Faser wurde noch bei höheren drücken vermessen um das Plastifizierungsverhalten und die Druckstabilität zu vermessen.

| Druck [bar] | Permeanz CO2 [GPU] | Permeanz Methan [GPU] | Selektivität |
|---|---|---|---|
| 10 | 3,365 | 0,051 | 66 |
| 20 | 3,199 | 0,045 | 72 |
| 30 | 3,535 | 0,034 | 103 |
| 40 | 4,025 | 0,042 | 96 |
| 50 | 4,376 | 0,033 | 131 |
| 60 | 4,300 | 0,026 | 165 |
| 70 | - | 0,027 | - |
| 90 | - | 0,014 | - |

Flachmembranherstellung

**Beispiel 20: Herstellung einer Flachmembran aus P84 Typ 70.**

Auf einer Flachmembrananlage werden aus einer Gießlösung beschrieben in Beispiel 14 35 cm breite Membranen hergestellt. Dabei wird die Gießlösung mittels einer Rakel und einem Gießspalt von 200 μ auf ein kalandriertes Polyestervlies mit einem Flächengewicht von 100 g/m2 und einer Geschwindigkeit von 5 m /min beschichtet. Das beschichtete Polyestervlies wird dann durch einen Schacht geleitet, der mit Stickstoff durchströmt ist. Die Durchströmungsgeschwindigeit beträgt 339 m / h. Die so erzielte Verweilzeit beträgt 3 s. Das beschichtete Vlies taucht dann in 10°C kaltes Wasser. Die Rohmembrane wird dann nass aufgewickelt.

Nachfolgend wird die Membrane bei 70°C in Wasser extrahiert und mit einem Konditioniermittel (25% Polyethylenglycoldimethylether (PGDME 250 der Firma Clariant) in Wasser) imprägniert. Die Trocknung erfolgt in einem Schwebetrockner bei einer Temperatur von 60°C.

Die Membran wird in einer Milipor -Rührzelle bei einem Druck von 5 bar charakterisiert. Als Lösungsmittel wird Heptan verwendet, darin ist Hexaphenylbenzol in einer Konzentration von 12 mg/l gelöst. Die Messung ergab einen Fluss von 1,7 $l.m^{-2}.h^{-1}.bar^{-1}$ bei einem Rückhalt von 94 %

Die Membran wird anschließend auch noch bei einem Druck von 30 bar und 30°C in Toluol getestet. Als Testmoleküle werden Oligostyrole verwendet. Der Fluss bei diesem Test von Toluol beträgt 90 1. $m^{-2}.h^{-1}$. Die Membran zeigt einen sehr hohen Rückhalt über den ganzen Molmassenbereich und einen scharfen Cut-off im Bereich zwischen 200 und 300 Dalton (siehe Abbildung 3).

Vernetzung der Membranen mit Diaminen

**Beispiel 21: Vernetzung einer Flachmembran mit Aminen**

Die Flachmembran aus Beispiel 20 wurde für 16 h in eine 0,1%ige ethanolische Lösung eines Oligoethylenimines ((#468533, Aldrich, Typisches Molekulargewicht 423, enthält 5 - 20% Tetraethylenpentamin) eingelegt. Die Membran vernetzt und zeigt keine Löslichkeit in Hexan, Heptan, Toluol, Xylol, Aceton, Butanon, Methanol, Ethanol, Isopropanol, Tetrahydrofuran, Dichlormethan, Chloroform, Dimethylformamid, Dimethylacetamid, N-Methylpyrrolidon, Dimethylsulfoxid und Ethylacetat.

Die Membran wird in einer Milipor -Rührzelle bei einem Druck von 5 bar charakterisiert. Als Lösungsmittel wird Dimethylformamid verwendet, darin ist Hexaphenylbenzol in einer Konzentration von 2,2 mg/l gelöst. Die Messung ergab einen Fluss von 1,3 $l.m^{-2}.h^{-1}.bar^{-1}$ bei einem Rückhalt von 89 %.

**Beispiel 22: Vernetzung einer Hohlfasermembran mit Aminen**

Die Hohlfasermembran aus Beispiel 19 wurde für 16 h in eine 0,1%ige Lösung von Hexamethylendiamin in Ethanol eingelegt. Die Membran vernetzt und zeigt keine Löslichkeit in Hexan, Heptan, Toluol, Xylol, Aceton, Butanon, Methanol, Ethanol, Isopropanol, Tetrahydrofuran, Dichlormethan, Chloroform, Dimethylformamid, Dimethylacetamid,

N-Methylpyrrolidon, Dimethylsulfoxid und Ethylacetat.

Figurenbeschreibung

Abbildung 1: Einfluss der Konzentration von P84 Typ 70 in DMF auf die Viskosität der Lösung: Vergleich einer P84 Polymerisationslösung und einer P84-Lösung hergestellt aus einem ausgefällten und wiederaufgelösten Polymer bei 25°C.

Abbildung 2: Querschnitte von Hohlfasermembranen mit (linkes Bild) und ohne (rechtes Bild) Macrovoids

Abbildung 3:
Anwendungstest der Membran aus Beispiel 20.

**Patentansprüche**

1. Verfahren zur Herstellung von Polyimidmembranen, umfassend die Schritte

   a) Herstellung des Polyimids aus aromatischen Dianhydriden oder Mischungen daraus und aromatische Diisocyanate oder Mischungen daraus
   b) Herstellung einer Gießlösung umfassend das Polyimid
   c) Herstellung einer Polyimidmembran aus der Gießlösung,

   wobei die Herstellung der Membran durch ein Phaseninversionsverfahren erfolgt, **dadurch gekennzeichnet, dass** das Polyimid zwischen den Schritten a) und b) nicht in Form eines Feststoffs, insbesondere nicht als getrockneter Feststoff, vor allem nicht als getrocknetes Pulver, isoliert und wieder aufgelöst wird

2. Verfahren nach Anspruche 1,
   **dadurch gekennzeichnet, dass**
   für die Herstellung der Polyimide in Stufe a)
   aromatische Dianhydride oder Mischungen daraus, ausgewählt aus 3,4,3',4'-Benzophenontetarcarbonsäuredianhydrid, Pyromellitsäuredianhydrid und 3,4,3',4'-Biphenyltetracarbonsäuredianhydrid
   und /oder
   aromatische Diisocyanate oder Mischungen daraus, ausgewählt aus 2,4-Tolylendiisocyanat, 2,6-Tolylendiisocyanat, 4,4'-Methylendiphenyldiisocyanat, 2,4,6-Trimethyl-1,3-phenylendiisocyanat, 2,3,5,6-Tetramethyl-1,4-phenylendiisocyanat
   und / oder
   aprotisch dipolare Lösungsmittel oder Mischungen daraus, bevorzugt Dimethylformamid, Dimethylacetamid, N-Methylpyrrolidinon, N-Ethylpyrrolidinon, Sulfolan, Tetrahydrofuran, Dioxan
   verwendet werden.

3. Verfahren nach einem der Ansprüche 1 oder 2,
   **dadurch gekennzeichnet, dass**
   es sich bei dem Polyimid um ein Polyimid mit folgender Struktur handelt:

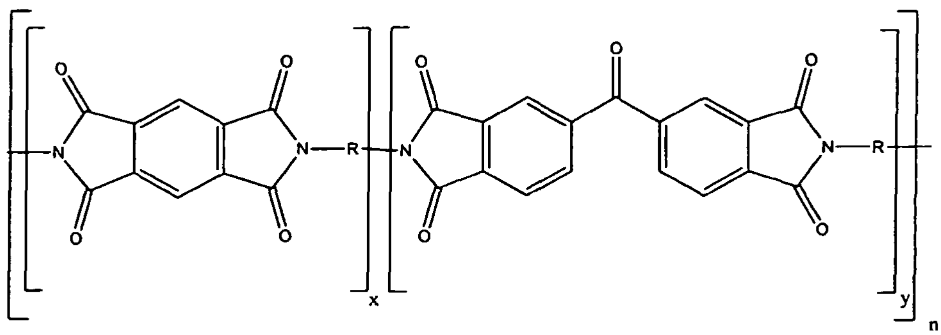

R ist ausgewählt aus der Gruppe bestehend aus

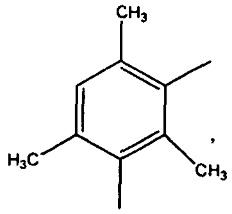 , 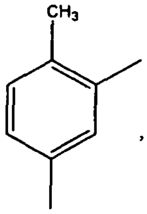 , 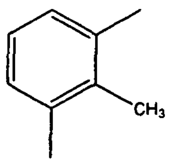 , 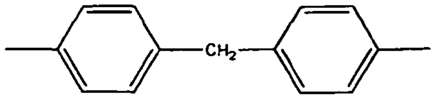

x,y: Molenbruch mit 0 < x < 0,5 und 1 > y > 0,5

**4.** Verfahren nach einem der Ansprüche 1 bis 3,
**dadurch gekennzeichnet, dass**
zur Herstellung der Gießlösung in Schritt b) wasserlösliche Additive zugesetzt werden, wobei als Additive bevorzugt flüchtige mit Wasser mischbare Lösungsmittel wie Diethylether, Tetrahydrofuran, Dioxan oder Aceton oder Mischungen daraus
und/oder
Nicht-Lösungsmittel wie Wasser, Methanol, Ethanol, n-Propanol, Isopropanol, Butanol, Butandiol, Ethylenglykol, Glycerin, Gamma-Butyrolacton oder Mischungen daraus
und/oder
Porenbildner, bevorzugt Polyvinylpyrolidinon und/oder
wassermischbare Lösungsmittel wie Dimethylformamid, Dimethylacetamid, N-Methylpyrrolidinon, N-Ethylpyrrolidinon, Sulfolan, Dimethylsulfoxid oder Mischungen daraus
verwendet werden.

**5.** Verfahren nach einem der Ansprüche 1 bis 4,
**dadurch gekennzeichnet, dass**
in Schritt c) ein Trägervlies mit einer Polyimidgießlösung beschichtet wird, wobei bevorzugt nach der Beschichtung des Trägervlieses mit einer Polymergießlösung ein Teil des Lösungsmittels mit einem trockenen thermostatisierten Stickstoff- oder Luftstrom verdampft wird, um die Trenngrenzen der Membran einzustellen

**6.** Verfahren nach einem der Ansprüche 1 bis 5,
**dadurch gekennzeichnet, dass**
die Polyimidmembran mit aliphatischen Diaminen oder Polyethyleniminen vernetzt wird, wobei bevorzugt aliphatische Diamine, wie Diaminoethan, Diaminopropan, Diaminobutan, Diaminopentan, Diaminohexan, Diaminooctan, Diaminodecan, Diaminododecan, Bis-4,4'-(aminomethyl)benzol, Oligoethylenimine, Polyethylenimine oder Mischungen daraus verwendet werden
und/oder
die Vernetzung durch Eintauchen in eine Lösung aus Diamin in Wasser oder Alkoholen wie Methanol oder Ethanol oder Isopropanol oder Mischungen daraus durchgeführt wird
und/oder
die Vernetzung bei Temperaturen zwischen 0 und 90°C, vorzugsweise zwischen 10 und 60°C und besonders vorzugsweise zwischen 15 und 30°C stattfindet
und/oder
die Vernetzungszeit zwischen 10 Sekunden und 16 Stunden, vorzugsweise zwischen 30 Sekunden und 30 Minuten und besonders vorzugsweise zwischen 1 und 5 min liegt
und/oder
die Konzentration des Diamins zwischen 0,01 Gew.-% und 50 Gew.-%, vorzugsweise zwischen 0,1 Gew.-% und 10 Gew.-% und besonders vorzugsweise zwischen 0,2 Gew.-% und 1 Gew.-% liegt.

**7.** Verfahren nach einem der Ansprüche 1 bis 4,
**dadurch gekennzeichnet, dass**
in Schritt c) eine integral asymmetrische Hohlfasermembran hergestellt wird, wobei bevorzugt die Hohlfaser mittels einer Zweistoffdüse aus einer Polyimidgießlösung nach Anspruch 4 und einer Bore Lösung in einem kontinuierlichen Verfahren gesponnen wird.

**8.** Verfahren nach Anspruch 7,
**dadurch gekennzeichnet, dass**
als Borelösung eine Mischung von Wasser oder Alkoholen mit Dimethylformamid, Dimethylacetamid, N-Methylpyrrolidinon, N-Ethylpyrrolidinon, Sulfolan, Dimethylsulfoxid oder Kombinationen daraus verwendet werden
und/oder
dass die Spinndüse einen Abstand von 1 bis 60 cm von einem Spinnbad aus Wasser hat, in das die Hohlfaser gesponnen wird und durch Ausfällen des Polymeren eine integral asymmetrische Hohlfasermembran formt
und/oder
das beim Spinnprozess der Hohlfaden vor dem Eintritt in das Spinnbad mit einem trockenen thermostatisierten Stickstoff- oder Luftstrom umspült wird, um die Trenneigenschaften der Membran einzustellen
und/oder
dass das Polyimidpolymer mit aliphatischen Diaminen oder Polyethyleniminen vernetzt wird, wobei besonders bevorzugt
als aliphatische Diamine Diaminoethan, Diaminopropan, Diaminobutan, Diaminopentan, Diaminohexan, Diaminooctan, Diaminodecan, Diaminododecan, Bis-4,4'-(aminomethyl)benzol, oligoethylenimin oder Polyethylenimin oder Mischungen daraus verwendet werden
und/oder
die Vernetzung durch Eintauchen in eine Lösung aus Diamin in Wasser oder Alkoholen wie Methanol oder Ethanol oder Isopropanol oder Mischungen daraus durchgeführt wird
und/oder
die Vernetzung bei Temperaturen zwischen 0 und 90°C, vorzugsweise zwischen 10 und 60°C und besonders vorzugsweise zwischen 15 und 30°C stattfindet
und/oder
die Vernetzungszeit zwischen 10 Sekunden und 16 Stunden, vorzugsweise zwischen 30 Sekunden und 30 Minuten und besonders vorzugsweise zwischen 1 und 5 min liegt
und/oder
die Konzentration des Diamins zwischen 0,01 Gew.-% und 50 Gew.-% , vorzugsweise zwischen 0,1 Gew.-% und 10 Gew.-% und besonders vorzugsweise zwischen 0,2 Gew.-% und 1 Gew.-% liegt.

**9.** Polyimidmembran
<u>**dadurch gekennzeichnet, dass**</u>
<u>sie nach</u> einem der Ansprüche 1 bis 8 <u>erhältlich ist, und</u> sie ein Polyimid umfasst, welches ein Mp > 100 000 $g.mol^{-1}$ (Mp = PeakMaximum der Molmassenverteilung, Kalibrierung gegen Polystyrolstandards in 0,01 mol/l Lithiumbromid in Dimethylformamid) und einen PDI im Bereich von 1,7 bis 2,3 aufweist (PDI = Mw/Mn; Mw = Gewichtsmittel der Molmassenverteilung; Mn = zahlenmittel der Momassenverteilung).

**10.** Polyimidmembran nach Anspruch 9,
**dadurch gekennzeichnet, dass**
sie einen PDI im Bereich von 1,8 bis 2,1 aufweist.

**11.** Polyimidmembran nach Anspruch 9 oder 10,
**dadurch gekennzeichnet, dass**
es sich bei dem Polymid um ein Polyimid mit folgender Struktur handelt:

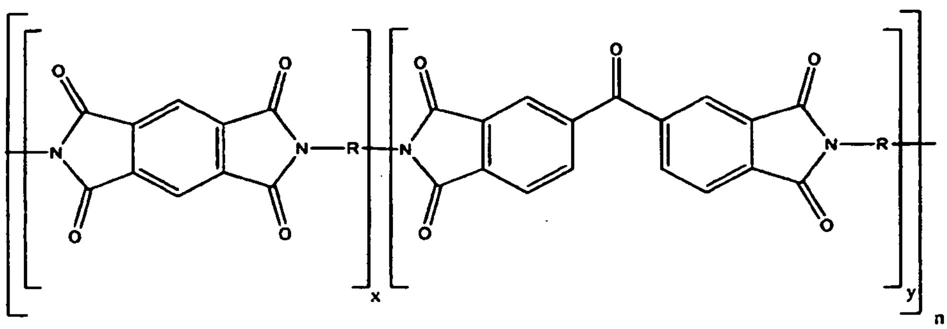

R ist ausgewählt aus der Gruppe bestehend aus

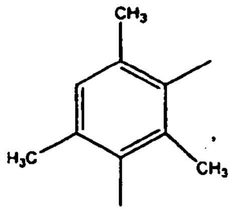,
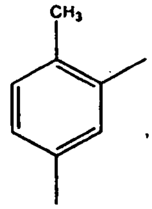,
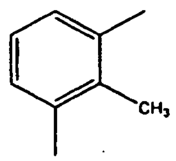,
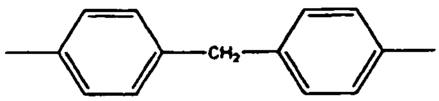

x,y: Molenbruch mit 0 < x < 0,5 und 1 > y > 0,5

**12.** Polyimidmembranen nach Anspruch 9 bis 11,
**dadurch gekennzeichnet, dass**
es sich um Micro-, Ultra- oder Nanofiltrationsmembranen handelt, die zur Abtrennung von homogen gelösten oder partikulären Stoffen aus organischen Lösungsmitteln oder aus Wasser eingesetzt werden können oder dass es Membranen ohne Poren sind, die zur Auftrennung von Gasen eingesetzt werden können.

**13.** Polyimidmembranen nach einem der Ansprüche 9 bis 12, **dadurch gekennzeichnet, dass**
es sich bei den Polyimidmembranen um
integral asymmetrische Flachmembranen auf einem Trägervlies, bevorzugt einem Trägervliese aus Polyphenylensulfid, Polyethylenterephtalat oder Polypropylen,
oder um integral asymmetrische Hohlfasermembranen handelt.

**14.** Polyimidhohlfasermembranen nach Anspruch 13,
**dadurch gekennzeichnet, dass**
sie zur Auftrennung verschiedenster Gasgemische, bevorzugt
zur Auftrennung von Methan und Kohlendioxid und/oder
zur Auftrennung von Sauerstoff und Stickstoff und/oder
zur Abtrennung von Wasserstoff aus Prozessgasen und/oder
zur Abtrennung von Wasserdampf aus Gasen oder
Gasgemischen
verschiedenster Art
verwendet werden können.

## Claims

**1.** Process for production of polyimide membranes, comprising the steps of

a) producing the polyimide from aromatic dianhydrides or mixtures thereof and aromatic diisocyanates or mixtures thereof
b) producing a casting solution comprising the polyimide
c) producing a polyimide membrane from the casting solution,

wherein the membrane is produced by a phase inversion process, **characterized in that** the polyimide between said steps a) and b) is not isolated in the form of a solid material, particularly not as dried solid material and more particularly not as dried powder, and redissolved.

**2.** Process according to Claim 1, **characterized in that** the step of producing the polyimides in stage a) uses aromatic dianhydrides or mixtures thereof, selected from 3,4,3',4'-benzophenonetetracarboxylic dianhydride, pyromellitic dianhydride and 3,4,3',4'-biphenyltetracarboxylic dianhydride
and/or
aromatic diisocyanates or mixtures thereof, selected from 2,4-tolylene diisocyanate, 2,6-tolylene diisocyanate, 4,4'-methylenediphenyl diisocyanate, 2,4,6-trimethyl-1,3-phenylene diisocyanate, 2,3,5,6-tetramethyl-1,4-phenylene diisocyanate
and/or
aprotic dipolar solvents or mixtures thereof, preferably dimethylformamide, dimethylacetamide, N-methylpyrrolidinone, N-ethylpyrrolidinone, sulfolane, tetrahydrofuran, dioxane.

**3.** Process according to either of Claims 1 and 2, **characterized in that** the polyimide is a polyimide of the following structure:

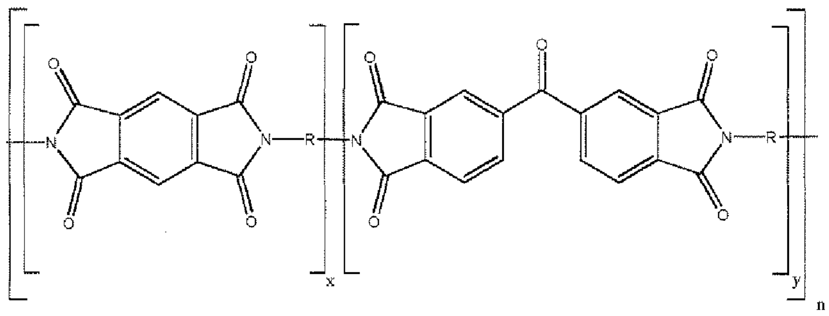

R is selected from the group consisting of

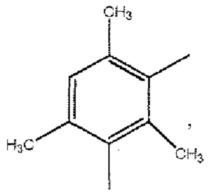 , 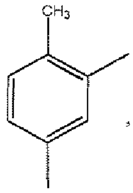 , 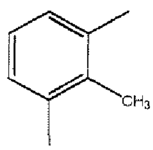 , 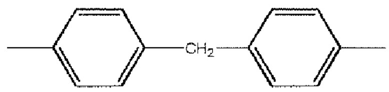

x, y: mole fraction with 0 < x < 0.5 and 1 > y > 0.5.

**4.** Process according to any one of Claims 1 to 3, **characterized in that** the casting solution is produced in step b) in the presence of watersoluble additives, wherein the additives used are preferably
volatile water-miscible solvents such as diethyl ether, tetrahydrofuran, dioxane or acetone or mixtures thereof
and/or
nonsolvents such as water, methanol, ethanol, n-propanol, isopropanol, butanol, butanediol, ethylene glycol, glycerol, gamma-butyrolactone or mixtures thereof
and/or
pore-formers, preferably polyvinyl-pyrrolidinone
and/or
water-miscible solvents such as dimethylformamide, dimethylacetamide, N-methylpyrrolidinone, N-ethylpyrrolidinone, sulfolane, dimethyl sulfoxide or mixtures thereof.

**5.** Process according to any one of Claims 1 to 4,
**characterized in that**
step c) comprises coating a backing fleece with polyimide casting solution, wherein preferably after the coating of the backing fleece with a polymer casting solution some of the solvent is vaporized with a dry thermostated stream of nitrogen or air in order to adjust the separation limits of the membrane.

**6.** Process according to any one of Claims 1 to 5,
**characterized in that** the polyimide membrane is crosslinked with aliphatic diamines or polyethyleneimines, wherein preferably
aliphatic diamines, such as diaminoethane, diaminopropane, diaminobutane, diaminopentane, diaminohexane, diaminooctane, diaminodecane, diaminododecane, bis-4,4'-(aminomethyl)benzene, oligoethyleneimines, polyethyleneimines or mixtures are used
and/or
the crosslinking is performed by dipping into a solution of diamine in water or alcohols such as methanol or ethanol or isopropanol or mixtures thereof
and/or
the crosslinking takes place at temperatures between 0 and 90°C, preferably between 10 and 60°C and more preferably between 15 and 30°C
and/or

the crosslinking time is between 10 seconds and 16 hours, preferably between 30 seconds and 30 minutes and more preferably between 1 and 5 min and/or
the concentration of diamine is between 0.01% by weight and 50% by weight, preferably between 0.1% by weight and 10% by weight and more preferably between 0.2% by weight and 1% by weight.

**7.** Process according to any one of Claims 1 to 4, **characterized in that** step c) comprises producing an integrally asymmetrically hollow fiber membrane, wherein preferably the hollow fiber is spun using a two-material die from a polyimide casting solution according to claim 4 and a bore solution in a continuous process.

**8.** Process according to Claim 7, **characterized in that**
the bore solution used is a mixture of water and alcohols with dimethylformamide, dimethylacetamide, N-methylpyrrolidinone, N-ethylpyrrolidinone, sulfolane, dimethyl sulfoxide or combinations thereof
and/or
**in that** the spinning die is at a distance of 1 to 60 cm from a spin bath of water into which the hollow fiber is spun and by precipitating the polymer an integrally asymmetrical hollow fiber membrane is formed
and/or
in the course of the spinning process the hollow thread before entry into the spin bath is subjected to the flow of a dry thermostated stream of nitrogen or air in order to adjust the separation properties of the membrane
and/or
**in that** the polyimide polymer is crosslinked with aliphatic diamines or polyethyleneimines, wherein more preferably as aliphatic diamines there are used diaminoethane, diaminopropane, diaminobutane, diaminopentane, diaminohexane, diaminooctane, diaminodecane, diaminododecane, bis-4,4'-(aminomethyl)benzene, oligoethyleneimines, polyethyleneimines or mixtures are used
and/or
the crosslinking is performed by dipping into a solution of diamine in water or alcohols such as methanol or ethanol or isopropanol or mixtures thereof
and/or
the crosslinking takes place at temperatures between 0 and 90°C, preferably between 10 and 60°C and more preferably between 15 and 30°C
and/or
the crosslinking time is between 10 seconds and 16 hours, preferably between 30 seconds and 30 minutes and more preferably between 1 and 5 min and/or
the concentration of diamine is between 0.01% by weight and 50% by weight, preferably between 0.1% by weight and 10% by weight and more preferably between 0.2% by weight and 1% by weight.

**9.** Polyimide membrane **characterized in that** it is obtainable according to any one of Claims 1 to 8, and it comprises a polyimide having an Mp > 100 000 $g.mol^{-1}$ (Mp = peak maximum of molar mass distribution, calibration against polystyrene standards in 0.01 mol/l of lithium bromide in dimethylformamide) and a PDI in the range from 1.7 to 2.3 (PDI = Mw/Mn; Mw = weight average of molar mass distribution; Mn = number average of molar mass distribution).

**10.** Polyimide membrane according to Claim 9 **characterized in that** it has a PDI in range from 1.8 to 2.1.

**11.** Polyimide membrane according to Claim 9 or 10, **characterized in that**
the polyimide is a polyimide of the following structure:

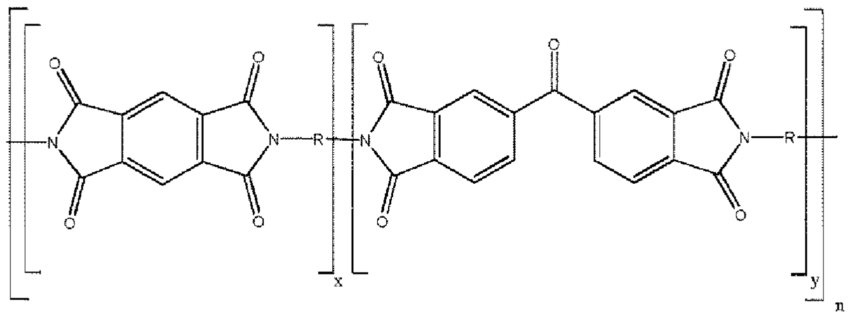

R is selected from the group consisting of

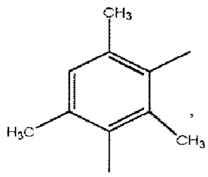 , 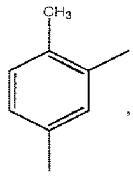 , 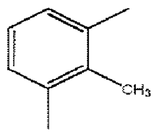 , 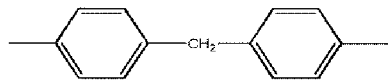

x, y: mole fraction with $0 < x < 0.5$ and $1 > y > 0.5$.

**12.** Polyimide membranes according to Claim 9 or 10 or 11, **characterized in that** they are micro-, ultra- or nanofiltration membranes useful for separating homogeneous dissolved or particulate products from organic solvents or from water, or **in that** they are no-pore membranes useful for separation of gases.

**13.** Polyimide membranes according to any one of Claims 9 to 12, **characterized in that** the polyimide membranes are integrally asymmetrical flat sheet membranes on a backing fleece, preferably a backing fleece of polyphenylene sulfide, polyethylene terephthalate or polypropylene,
or integrally asymmetrical hollow fiber membranes.

**14.** Polyimide hollow fiber membranes according to Claim 13, **characterized in that**
they are useful for separating a wide variety of gas mixtures, preferably
for separating methane and carbon dioxide, and/or
for separating oxygen and nitrogen and/or
for separating hydrogen from process gases and/or
for separating water vapor from gases or gas mixtures
of various kinds.

## Revendications

**1.** Procédé pour la préparation de membranes de polyimide, comprenant les étapes de :

a) préparation du polyimide à partir de dianhydrides aromatiques ou de mélanges de ceux-ci et de diisocyanates ou de mélanges de ceux-ci
b) préparation d'une solution à couler comprenant le polyimide
c) préparation d'une membrane de polyimide à partir de la solution à couler

la préparation de la membrane ayant lieu par un procédé à inversion de phases, **caractérisé en ce que** le polyimide n'est pas isolé sous forme d'un solide, en particulier pas sous forme d'un solide séché, surtout pas sous forme d'une poudre séchée entre les étapes a) et b) et à nouveau dissous.

**2.** Procédé selon la revendication 1, **caractérisé en ce qu'**on utilise
pour la préparation des polyimides dans l'étape a) des dianhydrides aromatiques ou des mélanges de ceux-ci, choisis parmi le dianhydride de l'acide 3,4,3',4'-benzophénonetétracarboxylique, le dianhydride de l'acide pyromellitique et le dianhydride de l'acide 3,4,3',4'-biphényltétracarboxylique et/ou des diisocyanates aromatiques ou des mélanges de ceux-ci,
choisis parmi le diisocyanate de 2,4-toluylène, le diisocyanate de 2,6-toluylène, le diisocyanate de 4,4'-méthylènediphényle, le diisocyanate de 2,4,6-triméthyl-1,3-phénylène, le diisocyanate de 2,3,5,6-tétraméthyl-1,4-phénylène et/ou
des solvants dipolaires aprotiques ou des mélanges de ceux-ci, de préférence le diméthylformamide, le diméthylacétamide, la N-méthylpyrrolidinone, la N-éthylpyrrolidinone, le sulfolane, le tétrahydrofuranne,
le dioxane.

**3.** Procédé selon l'une quelconque des revendications 1 ou 2, **caractérisé en ce qu'**il s'agit, pour le polyimide, d'un polyimide présentant la structure suivante :

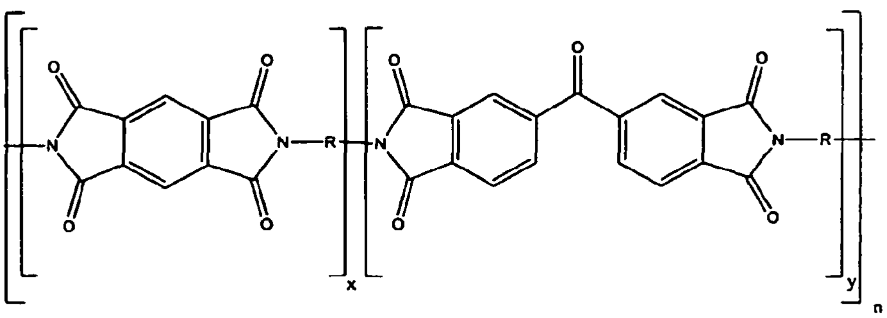

R est choisi dans le groupe constitué par :

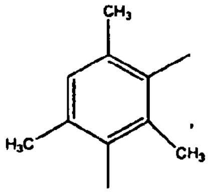, 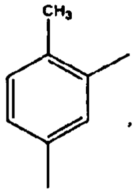, 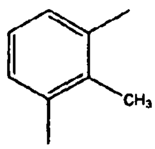, 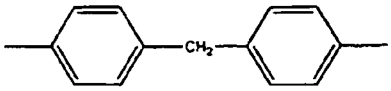

x, y : fraction molaire avec 0 < x < 0,5 et 1 > y > 0,5.

**4.** Procédé selon l'une quelconque des revendications 1 à 3, **caractérisé en ce qu'**on ajoute, pour la préparation de la solution à couler dans l'étape b), des additifs solubles dans l'eau,
en utilisant, comme additifs, de préférence des solvants volatils miscibles à l'eau, tels que le diéthyléther, le tétrahydrofuranne, le dioxane ou l'acétone ou des mélanges de ceux-ci et/ou des non-solvants, tels que l'eau, le méthanol, l'éthanol, le n-propanol, l'isopropanol, le butanol, le butanediol, l'éthylèneglycol, le glycérol, la gamma-butyrolactone ou des mélanges de ceux-ci et/ou des agents porogènes, de préférence la polyvinylpyrrolidone, et/ou
des solvants miscibles à l'eau, tels que le diméthylformamide, le diméthylacétamide, la N-méthylpyrrolidinone, la N-éthylpyrrolidinone, le sulfolane, le diméthylsulfoxyde ou des mélanges de ceux-ci.

**5.** Procédé selon l'une quelconque des revendications 1 à 4, **caractérisé en ce que**, dans l'étape c), on revêt un non-tissé support d'une solution à couler de polyimide, une partie du solvant étant de préférence évaporée, après le revêtement du non-tissé support par une solution à couler de polymère, par un flux d'azote ou d'air sec à température équilibrée, pour régler les limites de séparation de la membrane.

**6.** Procédé selon l'une quelconque des revendications 1 à 5, **caractérisé en ce que** la membrane de polyimide est réticulée par des diamines aliphatiques ou des polyéthylène-imines,
en utilisant de préférence des diamines aliphatiques, telles que le diaminoéthane, le diaminopropane, le diaminobutane, le diaminopentane, le diaminohexane, le diaminooctane, le diaminodécane, le diaminododécane, du bis-4,4'-(aminométhyl)benzène, des oligoéthylène-imines, des polyéthylène-imines ou des mélanges de ceux-ci et/ou
la réticulation étant réalisée par immersion dans une solution de diamine dans l'eau ou des alcools tels que le méthanol ou l'éthanol ou l'isopropanol ou des mélanges de ceux-ci et/ou
la réticulation ayant lieu à des températures entre 0 et 90°C, de préférence entre 10 et 60°C et en particulier de préférence entre 15 et 30°C et/ou le temps de réticulation étant situé entre 10 secondes et 16 heures, de préférence entre 30 secondes et 30 minutes et en particulier de préférence entre 1 et 5 min et/ou
la concentration en diamine étant située entre 0,01% en poids et 50% en poids, de préférence entre 0,1% en poids et 10% en poids et de manière particulièrement préférée entre 0,2% en poids et 1% en poids.

**7.** Procédé selon l'une quelconque des revendications 1 à 4, **caractérisé en ce qu'**on prépare, dans l'étape c), une membrane en fibre creuse asymétrique d'une pièce, la fibre creuse étant de préférence filée au moyen d'une buse à deux substances à partir d'une solution à couler de polyimide selon la revendication 4 et d'une solution de formation de trous dans un procédé continu.

**8.** Procédé selon la revendication 7, **caractérisé en ce qu'**on utilise comme solution de formation de trous un mélange d'eau ou d'alcools avec du diméthylformamide, du diméthylacétamide, de la N-méthylpyrrolidinone, de la N-éthylpyrrolidinone, du sulfolane, du diméthylsulfoxyde ou des combinaisons de ceux-ci et/ou **en ce que** la filière présente une distance de 1 à 60 cm d'un bain de coagulation composé d'eau, dans lequel la fibre creuse est filée et forme, par précipitation du polymère, une membrane à fibre creuse asymétrique d'une pièce et/ou **en ce que**, lors du procédé de filage, le fil creux est rincé par un flux d'azote ou d'air sec, à température équilibrée avant l'entrée dans le bain de coagulation pour régler les propriétés de séparation de la membrane et/ou **en ce que** le polymère de polyimide est réticulé par des diamines aliphatiques ou des polyéthylène-imines,
en utilisant de manière particulièrement préférée comme diamines aliphatiques le diaminoéthane, le diaminopropane, le diaminobutane, le diaminopentane, le diaminohexane, le diaminooctane, le diaminodécane, le diaminododécane, du bis-4,4'-(aminométhyl)benzène, des oligoéthylène-imines, des polyéthylène-imines ou des mélanges de ceux-ci et/ou
la réticulation étant réalisée par immersion dans une solution de diamine dans l'eau ou des alcools tels que le méthanol ou l'éthanol ou l'isopropanol ou des mélanges de ceux-ci et/ou
la réticulation ayant lieu à des températures entre 0 et 90°C, de préférence entre 10 et 60°C et en particulier de préférence entre 15 et 30°C et/ou le temps de réticulation étant situé entre 10 secondes et 16 heures, de préférence entre 30 secondes et 30 minutes et en particulier de préférence entre 1 et 5 min et/ou
la concentration en diamine étant située entre 0,01% en poids et 50% en poids, de préférence entre 0,1% en poids et 10% en poids et de manière particulièrement préférée entre 0,2% en poids et 1% en poids.

9. Membrane de polyimide, **caractérisée en ce qu'**elle peut être obtenue selon l'une quelconque des revendications 1 à 8, et elle comprend un polyimide qui présente un Mp > 100 000 $g.mol^{-1}$ (Mp = maximum de pic de la distribution des masses molaires, étalonnage par rapport à un standard de polystyrène dans 0,01 mole/l de bromure de lithium dans du diméthylformamide) et un PDI dans la plage de 1,7 à 2,3 (PDI = Mw/Mn ; Mw = moyenne pondérale de la distribution des masses molaires ; Mn moyenne numérique de la distribution des masses molaires).

10. Membrane de polyimide selon la revendication 9, **caractérisée en ce qu'**elle présente un PDI dans la plage de 1,8 à 2,1.

11. Membrane de polyimide selon la revendication 9 ou 10, **caractérisée en ce qu'**il s'agit, pour le polyimide, d'un polyimide présentant la structure suivante :

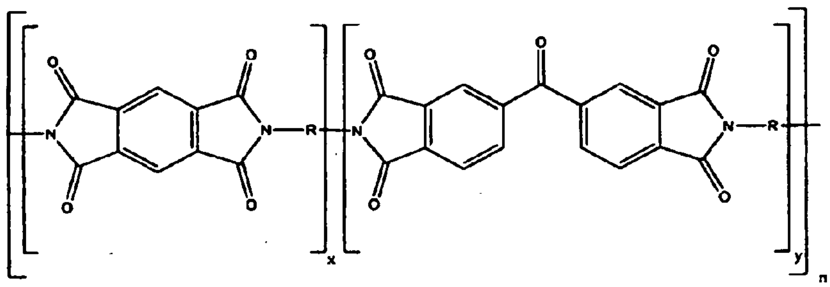

R est choisi dans le groupe constitué par :

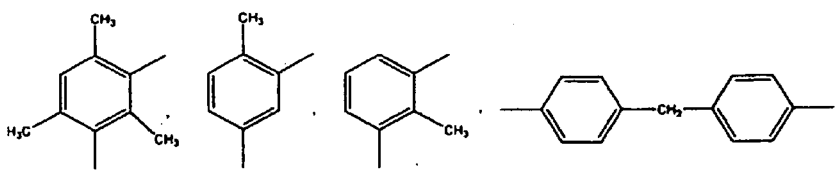

x, y : fraction molaire avec 0 < x < 0,5 et 1 > y > 0,5.

12. Membranes de polyimide selon la revendication 9 à 11, **caractérisées en ce qu'**il s'agit de membranes de microfiltration, d'ultrafiltration ou de nanofiltration, qui peuvent être utilisées pour la séparation de substances dissoutes de manière homogène ou particulaires de solvants organiques ou d'eau ou **en ce qu'**il s'agit de membranes sans pores, qui peuvent être utilisées pour la séparation de gaz.

13. Membranes de polyimide selon l'une quelconque des revendications 9 à 12, **caractérisées en ce qu'**il s'agit, pour

les membranes de polyimide,
de membranes plates asymétriques d'une seule pièce sur un non-tissé support, de préférence un non-tissé en poly(sulfure de phénylène), en poly(téréphtalate d'éthylène) ou en polypropylène,
ou de membranes à fibre creuse asymétriques d'une seule pièce.

**14.** Membranes à fibre creuse de polyimide selon la revendication 13, **caractérisées en ce qu'**elles peuvent être utilisées pour la séparation de mélanges gazeux les plus divers, de préférence pour la séparation de méthane et de dioxyde de carbone et/ou
pour la séparation d'oxygène et d'azote et/ou pour la séparation d'hydrogène de gaz de procédé et/ou pour la séparation de vapeur d'eau de gaz ou de mélanges gazeux
des types les plus divers.

Abbildung 1

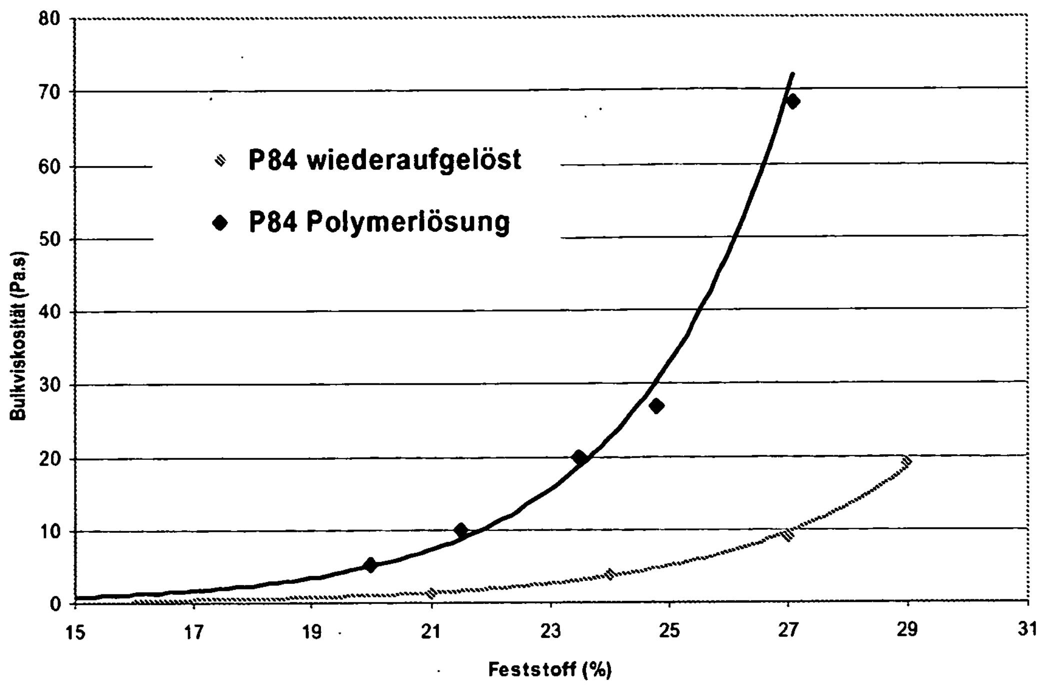
P84 wiederaufgelöst
P84 Polymerlösung
Bulkviskosität (Pa.s)
Feststoff (%)
0
10
20
30
40
50
60
70
80
15
17
19
21
23
25
27
29
31

Abbildung 2

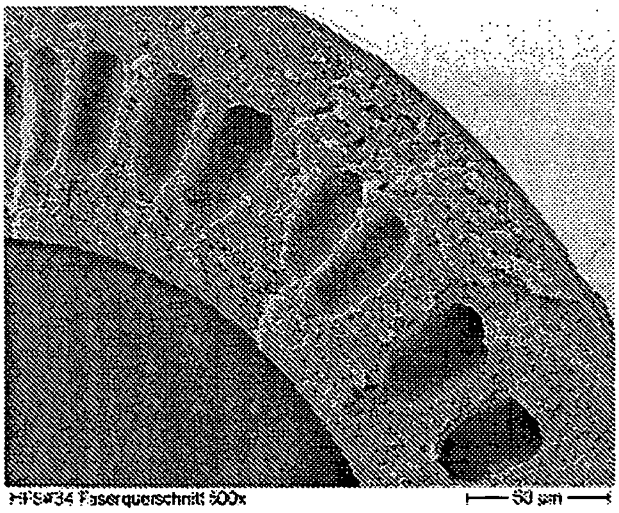

HFS#34 Faserquerschnitt 500x — 50 µm —

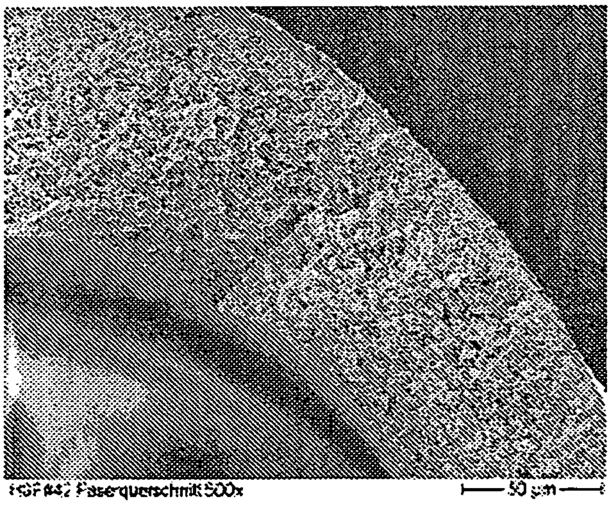

HGF#42 Faserquerschnitt 500x — 50 µm —

Abbildung 3:

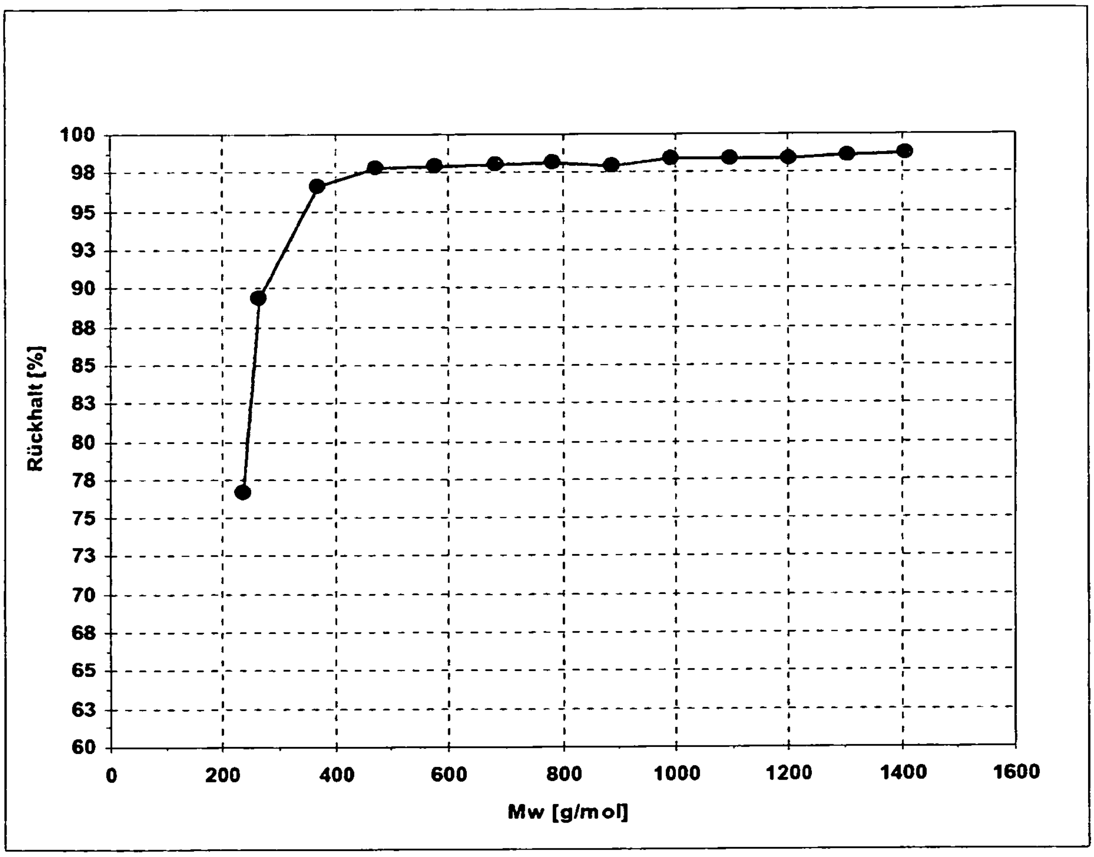
100
98
95
93
90
88
85
83
80
78
75
73
70
68
65
63
60
Rückhalt [%]
0
200
400
600
800
1000
1200
1400
1600
Mw [g/mol]

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 410793 A
- US 5055116 A
- US 20060156920 A
- WO 04050223 A
- US 7018445 B
- US 5635067 A
- EP 1457253 A
- US 7169885 B
- US 20040177753 A
- US 7025804 B
- US 2006156920 A
- WO 2006092677 A
- WO 2007125367 A
- WO 200006293 A